(19) **Europäisches Patentamt**

**European Patent Office**

**Office européen des brevets**

(11) **EP 1 236 935 B1**

(12) **EUROPEAN PATENT SPECIFICATION**

(45) Date of publication and mention
of the grant of the patent:
**04.01.2006 Bulletin 2006/01**

(51) Int Cl.:
***F16H 61/00*** *(2006.01)*

(21) Application number: **02004662.9**

(22) Date of filing: **28.02.2002**

(54) **Pulley thrust device for continuously variable transmission unit**

Riemenscheiben-Axialdruckgerät für ein stufenloses Getriebe

Dispositif de pression axiale de poulies pour transmission variable en continu

(84) Designated Contracting States:
**DE FR GB**

(30) Priority: **02.03.2001 JP 2001058513**
**12.06.2001 JP 2001177738**

(43) Date of publication of application:
**04.09.2002 Bulletin 2002/36**

(73) Proprietor: **KABUSHIKI KAISHA TOYOTA CHUO**
**KENKYUSHO**
**Aichi-gun,**
**Aichi-ken, 480-1192 (JP)**

(72) Inventors:
 • **Nishizawa, Hiroyuki,**
 **K.K. Toyota Chuo Kenkyusho**
 **,**
 **Aichi-gun,**
 **Aichi-ken 480-1192 (JP)**
 • **Yamaguchi, Hiroyuki,**
 **K.K. Toyota Chuo Kenkyusho,**

 **Aichi-gun,**
 **Aichi-ken 480-1192 (JP)**
 • **Suzuki, Hideyuki,**
 **K.K. Toyota Chuo Kenkyusho,**

 **Aichi-gun,**
 **Aichi-ken 480-1192 (JP)**
 • **Hada, Masatoshi,**
 **K.K. Toyota Chuo Kenkyusho,**

 **Aichi-gun,**
 **Aichi-ken 480-1192 (JP)**

 • **Tarutani, Ichiro,**
 **K.K. Toyota Chuo Kenkyusho,**

 **Aichi-gun,**
 **Aichi-ken 480-1192 (JP)**
 • **Osawa, Masataka,**
 **K.K. Toyota Chuo Kenkyusho,**

 **Aichi-gun,**
 **Aichi-ken 480-1192 (JP)**
 • **Nagasawa, Yuji,**
 **K.K. Toyota Chuo Kenkyusho,**

 **Aichi-gun,**
 **Aichi-ken 480-1192 (JP)**
 • **Iwatuki, Kunihiro**
 **Toyota-shi,**
 **Aichi-ken, 471-8571 (JP)**
 • **Nakawaki, Yasunori**
 **Toyota-shi,**
 **Aichi-ken, 471-8571 (JP)**
 • **Hoshiya, Kazumi**
 **Toyota-shi,**
 **Aichi-ken, 471-8571 (JP)**
 • **Oshiumi, Yasuhiro**
 **Toyota-shi,**
 **Aichi-ken, 471-8571 (JP)**

(74) Representative: **Kramer - Barske - Schmidtchen**
**European Patent Attorneys**
**Patenta**
**Radeckestrasse 43**
**81245 München (DE)**

(56) References cited:
**EP-A- 0 969 230        DE-A- 19 645 975**
**DE-A- 19 851 110        US-A- 5 427 579**

**Description**

BACKGROUND OF THE INVENITON

1. Field of Invention:

The present invention relates to a pulley thrust control device for a continuously variable transmission unit according the preamble of claim 1, which comprises a driving pulley (a primary pulley) and a following pulley (a secondary pulley) connected to each other by a belt and which allows continuous changing of a speed changing ratio by changing the effective diameters of both of the pulleys. In particular, the present invention relates to control of thrust or a belt clamping force of the pulleys.

2. Description of Related Art:

Conventionally, continuously variable transmission units capable of continuous changing of a speed changing ratio have been known for use as a power transmission unit for vehicles. As such a conventional continuously variable transmission unit, a belt-type continuously variable transmission unit in which a driving pulley (a primary pulley) and a following pulley (a secondary pulley) are connected to each other via a belt and the effective diameters of the driving and following pulleys are changed is widely employed.

In such a belt-type continuously variable transmission unit, opposing, substantially conic sheaves together constitute a pulley and the distance between the opposing sheaves is changed to thereby change the effective diameter of the pulley. In order to change the effective diameter, most commonly, the sheaves are hydraulically driven. That is, the belt clamping force of a pulley (a pulley thrust) is hydraulically controlled. It should be noted that belts in common use comprise a number of blocks which are fixed by a strip-like hoop.

In this belt-type continuously variable transmission unit, the thrust of one of the pulleys (for example, the driving pulley) is initially determined and the thrust of the other pulley (for example, the following pulley) is then determined such that the other pulley will not slip.

Although belt slip could be reliably prevented by setting a very large thrust on the following pulley, this may cause a problem that transmission efficiency may be deteriorated. When, on the other hand, the pulley thrust is too small, belt slip may result, which further causes a problem of insufficient power transmission.

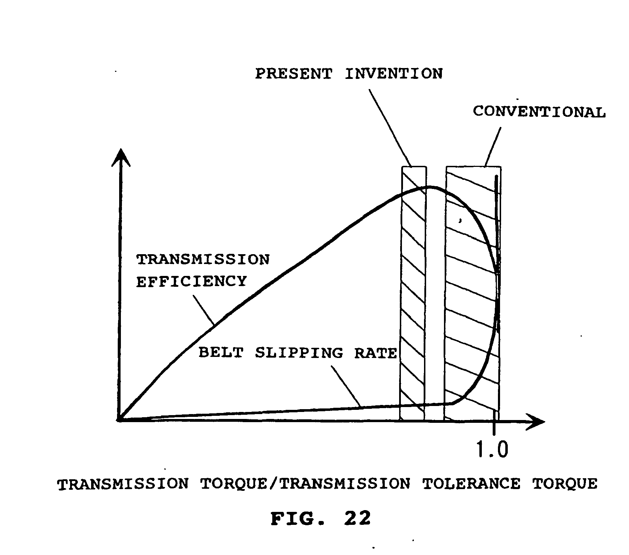

In other words, as shown in Fig. 22, increasing the ratio of transmission torque to transmission tolerance torque.leads to an increase of transmission efficiency and also a gradual increase of a belt slip ratio, the transmission torque being the torque actually transmitted and the transmission tolerance torque being a torque transmittable without causing belt slip. However, for ratios approaching 1.0, such characteristics are presented that the belt slip rate sharply increases, causing macro-slip and a drop in transmission efficiency.

Conventionally, to suppress belt slip to a predetermined amount, a detected belt slip value is used to determine pulley thrust. While this makes it possible to suppress belt slip and improve transmission efficiency, because such pulley thrust control reacts to observed belt slip, this conventional system allows a certain amount belt slip. As a result, disturbances, such as a change in pulley transmission torque or the like, often cause a large belt slip (macro-slip).

DE 198 51 110 A1 discloses a method for calculating a minimal thrust force for a driving pulley and a following pulley of a belt-type continuously variable transmission unit. A primary pressure and a secondary pressure in the state of constant transmission ratio are calculated. Further, a relationship is established between a changing speed of a transmission and the primary pressure and the secondary pressure, using the assumption that the changing speed of the transmission is proportional to the amount of deviation of thrust from the thrust balance obtained when the transmission ratio is maintained constant. When the thrust deviates from the original value to disturb the balance, the changing speed of the transmission is determined in proportion to the amount of the deviation.

EP 0 969 230 A1 and US 5,427,579, which forms the preamble of claim 1, refer to a method for controlling a speed ratio of a belt-type continuously variable transmission unit. If an engine speed is to be changed, the difference between the target engine speed and the actual engine speed is calculated. Further, a present speed ratio of the driving pulley and the following pulley is calculated and then an axial thrust force ratio between the respective thrust forces of the pulleys is determined, which is necessary to keep the original speed ratio of the pulleys constant.

SUMMARY OF THE INVENTION

The present invention aims to provide a pulley thrust control device of a belt-type continuously variable transmission unit, which can appropriately control a pulley thrust. This object is solved by a pulley thrust control device comprising the features of claim 1.

According to the present invention, a pulley thrust is controlled based on the state of change of a thrust ratio.

The thrust ratio peaks just before occurrence of possible significant slip (macro-slip) of the belt. Power transmission efficiency also peaks before slip occurrence. Thus, a pulley thrust can be appropriately controlled by controlling it according to the state of change of a thrust ratio.

The thrust ratio peaks immediately before macro-slip occurs and power transmission efficiency is maximized also immediately before macro-slip occurs. Thus, efficient control of the pulley thrust can be realized by controlling the pulley thrust such that the thrust ratio closely approaches the point where the gradient of changing of the thrust ratio changes. Preferred embodiments are defined by the dependent claims.

In particular, more preferable control of thrust may be realized by including in the gradient compensation of a time delay.

Still further, setting a time for delay compensation according to the gradient can realize precise detection of the point where the gradient changes without delaying the conversion.

Yet further, conducting time delay compensation through high-pass filtering can realize effective time compensation.

Yet further, periodic changing of pulley thrust can facilitate detection of the peak of a thrust ratio.

Yet further, measuring a hydraulic pressure which defines the thrust of the driving and following pulleys can facilitate measuring of a pulley thrust.

Yet further, determining a thrust ratio based on a command value for a hydraulic pressure which defines the thrust of the driving and following pulleys allows omission of determination means such as a hydraulic sensor.

BRIEF DESCRIPTION OF THE DRAWINGS

Fig. 1 is a diagram showing the system structure of a pulley thrust control device of a belt-type continuously variable transmission unit according to a preferred embodiment of the present invention;
Fig. 2 is a diagram showing relationships between thrust of a following pulley and a thrust ratio and between the thrust and an active arc portion;
Fig. 3 is a diagram showing a block pressing force when there is excess thrust;
Fig. 4 is a diagram showing a pulley tension and pulley thrust when there is excess thrust;
Fig. 5 is a diagram showing a block pressing force when thrust drops;
Fig. 6 is a diagram showing a pulley tension and pulley thrust when thrust drops;
Fig. 7 is a diagram showing a block pressing force when thrust further decreases;
Fig. 8 is a diagram showing a pulley tension and pulley thrust when thrust further decreases;
Fig. 9 is a diagram showing relationship among thrust, transmission efficiency, and a thrust ratio;
Fig. 10 is a diagram to explain the decrease based on Eular Theory;
Fig. 11 is a diagram showing a structure for generating thrust command value;
Fig. 12 is a diagram showing characteristics of a thrust ratio;
Fig. 13 is a diagram showing relationship among hydraulic pressure excitement frequency, a phase, and a gain;
Fig. 14 is a diagram showing relationship among a hydraulic pressure, transmission efficiency, and a thrust ratio phase;
Fig. 15 is a diagram showing relationship between a thrust ratio phase and a hydraulic phase without excitation of the hydraulic pressure;
Fig. 16 is a diagram showing a system structure in which a speed ratio is controlled on a follower side;
Fig. 17 is a diagram showing a system structure in which thrust is estimated using a hydraulic command value;
Fig. 18 is a diagram showing thrust ratio characteristics when a hydraulic command value is used;
Fig. 19 is a diagram showing a system structure employable when the rate of rotation can be assumed small;
Fig. 20 is a diagram showing a system structure using a driving torque fluctuation;
Fig. 21 is a diagram showing a system structure using an average friction coefficient ratio;
Fig. 22 is a diagram showing relationship among a transmission torque, a belt slip rate, and transmission efficiency;
Fig. 23 is a diagram illustrating updating of a control map 110;
Fig. 24 is a diagram showing an approximate method using a tangent of a thrust ratio at an operation point;
Fig. 25 is a diagram showing a result of identification of gradient k;
Fig. 26 is a diagram showing a delay time $\Delta t$ relative to changing of a thrust ratio;
Fig. 27 is a flowchart of a process of determining a time constant T of a high-pass filter;
Fig. 28 is a diagram showing a result of detection of the peak of a thrust ratio; and
Fig. 29 is a blockdiagram showing a structure for detecting the peak of a thrust ratio from its gradient.
Fig. 30 is a diagram showing a structure of major elements of another embodiment of the present invention;
Fig. 31 is a diagram showing relationship between secondary thrust and a thrust ratio;

Fig. 32 is a diagram showing a flowchart explaining operation of a still another embodiment of the present invention;
Fig. 33 is a structure of major elements of a yet another embodiment;
Fig. 34 is a diagram showing relationshipbetween secondary thrust and a thrust ratio;
Fig. 35 is a flowchart explaining an example of operation of a yet another embodiment of the present invention;
Fig. 36 is a flowchart exampling an example of operation of a yet another embodiment; and
Fig. 37 is a flowchart explaining an example of operation of a yet another embodiment.

PREFERRED EMBODIMENTS OF THE PRESENT INVENTION

In the following, preferred embodiments of the present invention will be described based on the accompanying drawings.

Embodiment 1.

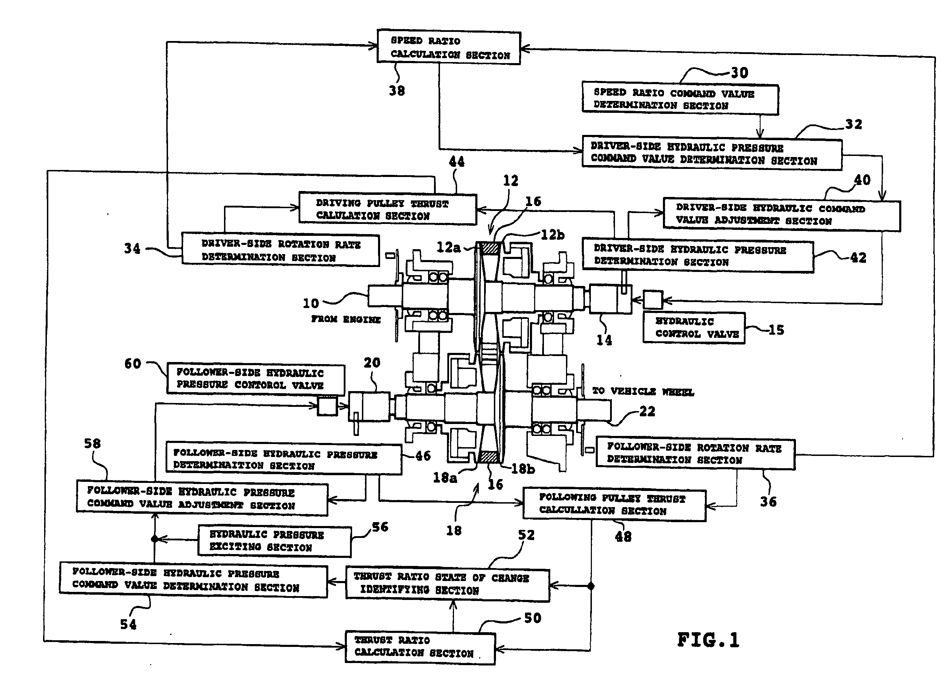

Fig. 1 is a diagram showing a complete structure of a first embodiment of the present invention. An input axis 10 from an engine is connected to a driving pulley 12, which consists of sheaves 12a, 12b. The driving pulley 12 comprises a fixed sheave 12a and a movable sheave 12b, the movable 12b being movable by means of hydraulic pressure from a hydraulic device 14. Because the hydraulic pressure from the hydraulic device 14 is adjustable using a hydraulic control valve 15, controlling the hydraulic control valve 15 enables control of the position of the movable sheave 12b in the axial direction.
The sheaves 12a, 12b each have a substantially conic shape, with the space between their opposing surfaces increasing outwardly. When the movable sheave 12b is caused to move closer to the fixed sheave 12a by the hydraulic pressure from the hydraulic device 14, the space between the sheaves 12a, 12b becomes narrower, thereby increasing the effective diameter of the pulley 12. When, on the other hand, the movable sheave 12b is caused to move away from to the fixed sheave 12a by the hydraulic pressure from the hydraulic device 14, the space between the sheaves 12a, 12b becomes larger, thereby decreasing the diameter of the pulley 12.
A belt 16 is wound around the driving pulley 12 is and connected to the following pulley 18. The belt 16 comprises a number of blocks which are juxtaposed and tightened by a hoop.
The following pulley 18 has an identical structure to that of the driving pulley 12 and specifically comprises opposing substantially conic fixed sheave 18a and movable sheave 18b, in which the movable sheave 18b is movable by a hydraulic device 20. Also in the following pulley 18, the effective diameter becomes larger as the movable sheave 18b moves closer to the fixed sheave 18a and smaller as the movable sheave 18b moves away from the fixed sheave 18a. The following pulley 18 is connected to an output axis 22 to transmit power to a vehicle wheel.
By controlling the hydraulic pressure applied to the driving and following pulleys 12, 18 to determine the effective diameters of the driving and following pulleys 12, 18, the speed changing ratio is controlled. In this embodiment, hydraulic pressure control to determine a speed changing ratio is applied to the driving pulley 12, while hydraulic pressure control to achieve optimum transmission efficiency is applied to the following pulley 18. The force generated by the hydraulic pressure is referred to as the pulley thrust, which is a force acting in the axial direction of the driving and following pulleys 12, 18, which together clamp the belt 16, and clamping the belt 16. That is, controlling the components to achieve appropriate thrust of the driving and following pulleys 12, 18 can realize a speed changing ratio as commanded and appropriate power transmission ratio while preventing slip of the belt 16.
Next, a structure for such control will be described.
Initially, based on vehicle information including a vehicle speed, an input of the accelerator, and so forth, a speed ratio command value determination section 30 determines a speed ratio command value corresponding to a speed changing ratio, the speed ratio command value being a rotation speed ratio between the driving and following pulleys 12, 18. The determined speed ratio command value is supplied to a driver-side hydraulic pressure command value determination section 32. Meanwhile, the rate of rotation of the input axis 10, determined by a driver-side rotation rate determination section 34, and the rate of rotation of the output axis 22, determined by a follower-side rotation rate determination section 36, are both supplied to a speed ratio calculation section 38, where a speed ratio between the input and output axes 10, 22 is calculated, and the resultant speed ratio is supplied to the driver-side hydraulic pressure command value determination section 32.
The driver-side hydraulic pressure command value determination section 32 compares the speed ratio command value supplied from the speed ratio command value determination section 30 and an actual speed ratio supplied from the speed ratio calculation section 38 and determines a driver-side hydraulic pressure command value. Here, increasing the hydraulic pressure can enlarge the effective diameter of the driving pulley 12, thereby increasing a speed changing ratio. The hydraulic pressure command value is so determined that the speed changing ratio is set as commanded. Here, it should be noted that the speed ratio and the speed changing ratio have a one-to-one relationship. In the following description, either term will be used as appropriate.

The determined hydraulic pressure command value is supplied to a driver-side hydraulic pressure command value adjustment section 40, which also receives a determined hydraulic pressure value from a driver-side hydraulic pressure determination section 42, which determines a driver-side hydraulic pressure, that is, an output hydraulic pressure from the hydraulic device 14. The driver-side hydraulic command value adjustment section 40 controls a driver-side hydraulic control valve 15 based on the hydraulic pressure command value and the determined hydraulic pressure value so as to feedback control the hydraulic pressure of the hydraulic device 14.

Also, values determined by the driver-side rotation rate determination section 34 and the driver-side hydraulic pressure determination section 42 are supplied to a driving pulley thrust calculation section 44. The driver-side rotation rate determination section 34 calculates the force in the axial direction of the pulley 12 based on the hydraulic pressure and a centrifugal force based on the rate of rotation, and also calculates driving pulley thrust, or a clamping force of the driving pulley 12 which acts on the belt 16.

Meanwhile, the hydraulic pressure of a follower-side hydraulic device 20 is determined by a follower-side hydraulic pressure determination section 46 and supplied to a following pulley thrust calculation section 48. The following pulley thrust calculation section 48, which also receives a value determined by the follower-side rotation rate determination section 36, calculates thrust of the following pulley based on these determined values.

Then, the thrust of the driving pulley 12, calculated by the driving pulley thrust calculation section 44, and the thrust of the following pulley 18, calculated by the following pulley thrust calculation section 48, are supplied to a thrust ratio calculation section 50, where a thrust ratio is calculated by dividing the driving pulley thrust by the follower-side thrust.

The thrust ratio calculated by the thrust ratio calculation section 50 is supplied to a thrust ratio state of change identifying section 52. Based on supplied values, the thrust ratio state of change identifying section 52, which also receives a value for thrust of the following pulley 18 from the following pulley thrust calculation section 48, identifies the state of change of the thrust ratio according to changes in the thrust.

The thrust ratio state of change identifying section 52 then sends an output to a follower-side hydraulic pressure command value determination section 54. Based on the supplied state of change of the thrust ratio, the follower-side hydraulic pressure command value determination section 54 determines a point where the direction of changing of a thrust ratio is inverted (a point where a thrust ratio peaks) according to changing of the thrust and then determines a hydraulic pressure command value so as to control the thrust of the following pulley 18 such that the thrust ratio approaches that point. To the determined hydraulic pressure command value, a low frequency excitement signal from a hydraulic pressure exciting section 56 is added, and the resultant value is supplied to a follower-side hydraulic pressure command value adjustment section 58. That is, the excitement signal causes the follower-side hydraulic pressure command value to change periodically around a target value.

The follower-side hydraulic pressure command value adjustment section 58, which is also supplied with a value determined by the follower-side hydraulic pressure determination section 46, applies feedback control to a follower-side hydraulic pressure control valve 60 causing the hydraulic device 20 to generate hydraulic pressure as commanded.

As described above, in this embodiment, the thrust of the driving pulley 12 is controlled by changing the diameter of the driving pulley 12 such that the speed ratio (a speed changing ratio) between the driver and follower sides assumes a value as commanded. Meanwhile, on the following pulley side, the thrust of the following pulley is controlled based on the state of change of the thrust ratio according to change in the thrust on the following side such that the state of change of the thrust ratio changes (i.e., peaks), the thrust ratio being a ratio between the following and driving pulley thrust.

Here, thrust control based on the state of change of a thrust ratio will be described.

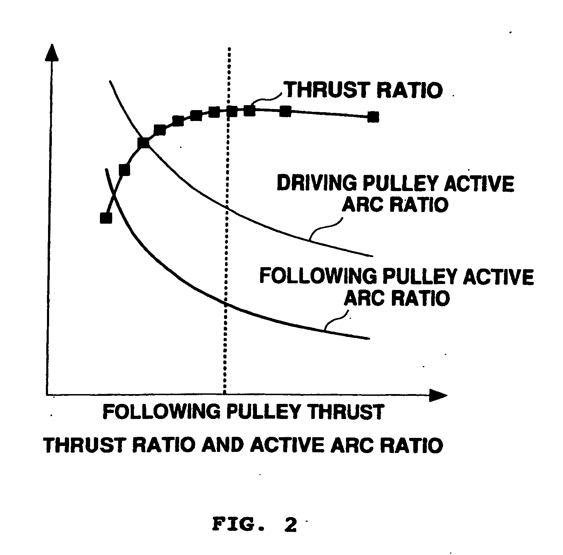

Fig. 2 shows thrust ratios and changing rates of an active arc portion on the driving and following pulleys with respect to changing thrust of the following pulley under conditions of a constant speed ratio (1 or greater) and input torque. An active arc portion refers to a portion which contributes to power transmission by a pulley.

An experiment was carried out in which a following pulley thrust was initially set sufficiently large (corresponding to the right half of the drawing) and gradually reduced for determination of the active arc portion and respective pulley thrust. As the following pulley thrust decreases, the active arc portion gradually increases and the thrust ratio also increases to the point (its peak) indicated by the broken line in the drawing, after which it begins to decrease.

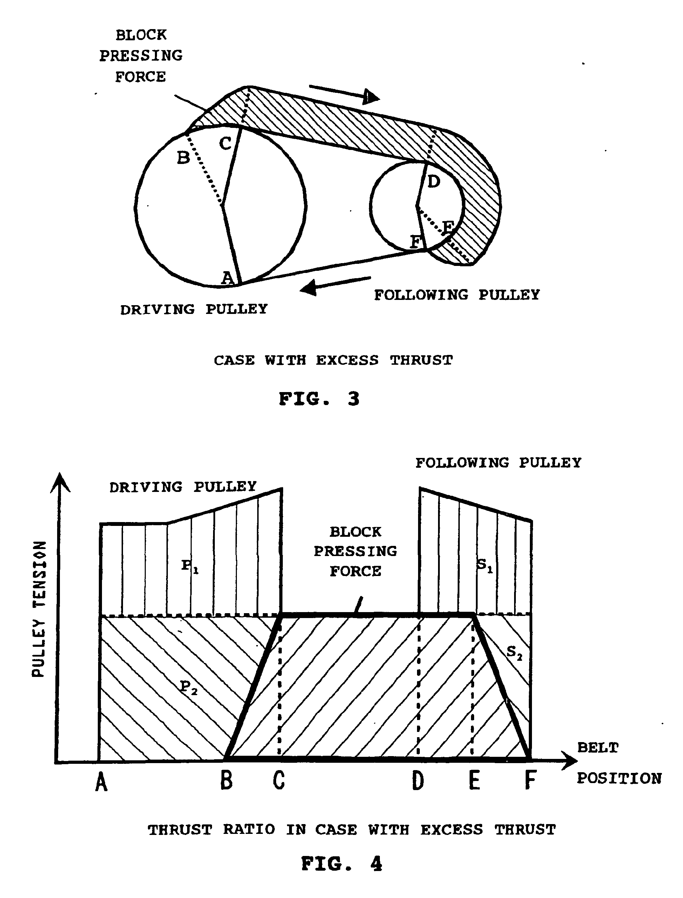

Figs. 3 to 8 illustrate the state of power transmission by the belt (a block pressing force) and hoop tension depending on the position of the belt 16. In the belt position between A and B, the belt 16 winds around the driving pulley 12 and does not contribute to a moving force of the belt 16 (a block pressing force). The belt position between B and C corresponds to an active arc portion on the driving pulley. In the belt position between D and E, the belt 16 winds around the following pulley. The belt position between E and F corresponds to an active arc portion on the follower side.

The area P1+P2 in Figs. 4 and 6, corresponding to an area corresponding to a hoop tension on the driving pulley deducted by an area corresponding to a block pressing force in the active arc portion, corresponds to the thrust which acts on the driving pulley (a driving pulley thrust). Similarly, the area S1+S2, corresponding to an area corresponding to a hoop tension on the following pulley deducted by an area corresponding to a block pressing force in the active arc portion, corresponds to the thrust acting on the following pulley (a following pulley thrust). P1, S1 represent areas where the hoop tension is larger than the block pressing force, while P2, S2 represent areas where the hoop tension is smaller than the block pressing force. It should be noted that the areas of hoop tension shown above the range of active arc portions in the graph correspond to a force required to be applied to the belt 16 corresponding to a transmission torque (a block pressing force).

Figs. 3 and 4 relate to a state where the following pulley 18 has sufficiently large thrust and excess thrust is thus available. In this state, because the hoop tension is sufficiently large throughout the entire region, a necessary block pressing force can be obtained despite a small active arc portion.

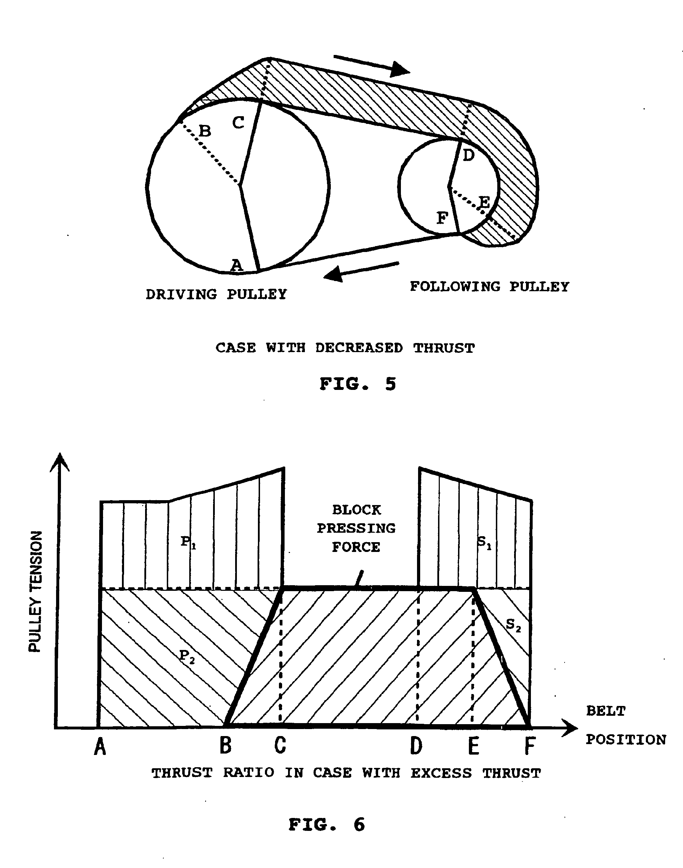

Figs. 5 and 6 relate to a state where the thrust of the following pulley 18 is reduced from the state of Figs. 3 and 4. In this case, compared to Figs. 3 and 4, the active arc portion area changes only slightly, while the thrust P1, S1 is reduced remarkably. Although the reduction of the area P1, namely $\Delta$ P1, is larger than that S1, namely $\Delta$S1, because the area P2 remains sufficiently larger than the area S2 (P2>S2), the thrust ratio (P1+P2)/(S1+S2) increases.

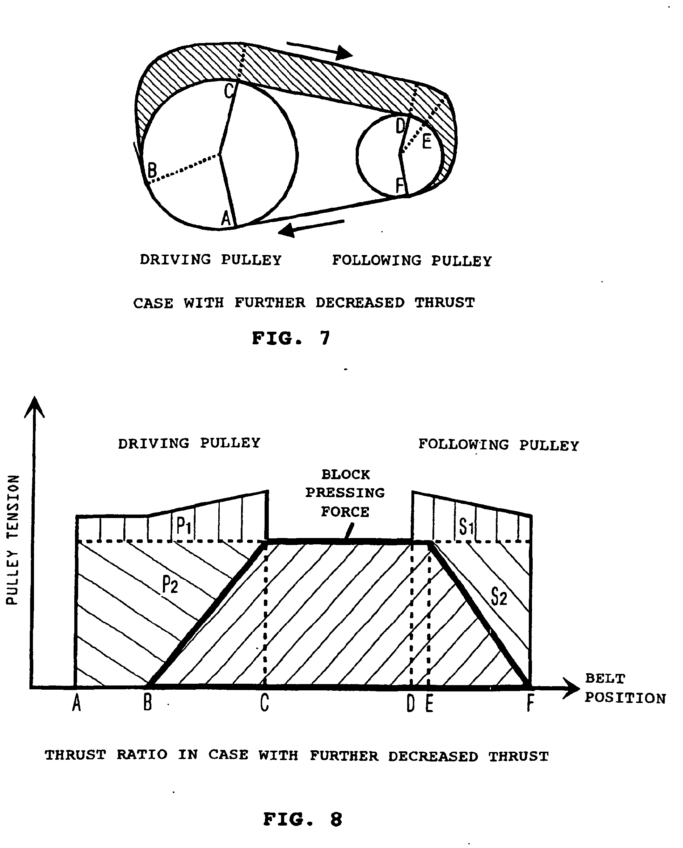

Figs. 7 and 8 relates to a state where the thrust of the following pulley 18 is further reduced from the state of Figs. 5 and 6. In this case, compared to Figs. 5 and 6, the active arc portion increases remarkably and a decrease of the thrust P2 and an increase of the thrust S2 are notable. Therefore, the thrust ratio (P1+P2)/(S1+S2) decreases.

As described above, when the rate of change of the active arc portion increases, the increasing thrust ratio begins to decrease. This occurs just before the belt 16 begins to experience large slip (macro-slip), or near the point of maximum transmission efficiency in Fig. 22.

It has been confirmed that this phenomenon occurs even when the speed ratio is 1 or less or when the excess thrust is being reduced while the thrust remains constant and the input torque increases.

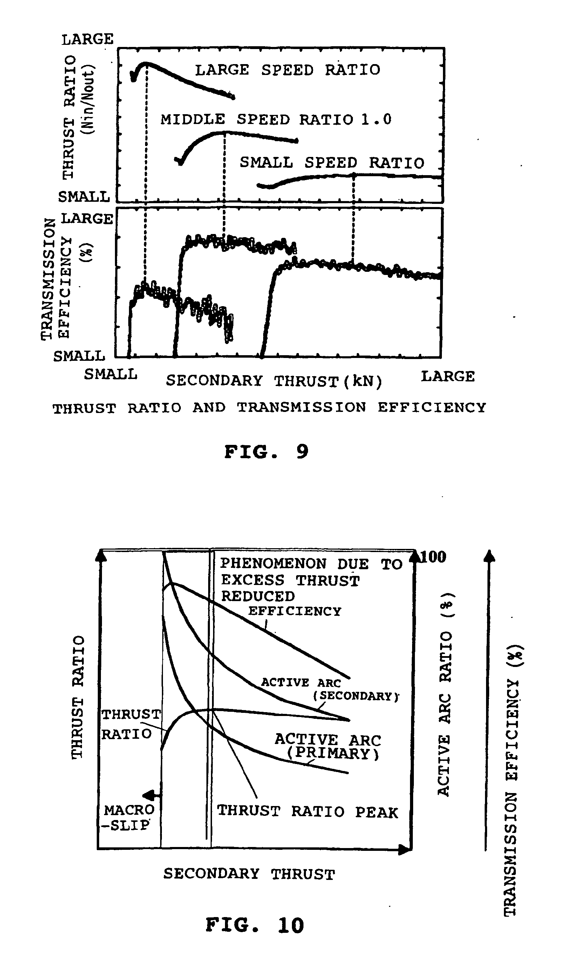

Fig. 9 shows characteristics of thrust ratios and transmission efficiency according to following pulley thrust (secondary thrust) for various speed ratios. As shown, while the following pulley thrust is decreasing, large slip (macro-slip) begins to occur, causing the transmission efficiency to drop sharply. However, immediately before the sharp drop of the transmission efficiency, the thrust ratio peaks. That is, although the thrust ratio peaks not exactly at a point of maximum transmission efficiency, the transmission efficiency when the thrust ratio peaks is still sufficiently high.

Moreover, for a larger speed ratio, the thrust ratio peaks at a point closer to the point of the maximum transmission efficiency, although it may peak well before the point of maximum transmission efficiency for a smaller speed ratio. Further, the larger the speed ratio, the larger the increase of transmission efficiency due to reduction of the thrust. In light of this, larger improvement in the transmission efficiency through thrust control, such that the thrust ratio peaks, is expected for a larger speed ratio. That is, control according to this embodiment can produce a larger effect during high speed operation.

This phenomenon can be explained using Euler Theory, and Fig. 10 is a diagram to explain this phenomenon based on Euler Theory. It can be seen from the drawing that the thrust ratio peaks where the active arc portion begins to increase sharply. Therefore, it is understood that controlling a pulley thrust (secondary thrust) such that the thrust ratio approaches its peak can realize control of the thrust which achieves highly efficientpower transmission while preventing macro-slip. When the active arc portion reaches 100%, large slip (macro-slip) begins to occur. Thus, it is important to maintain the pulley thrust (secondary thrust) higher than this point, at which the active arc portion reaches 100%.

In this embodiment, thrust of the following pulley 18 is changed by the hydraulic pressure exciting section 56 and the state of change of the thrust ratio caused by the changing of the thrust is observed. A point at where the state of change switches between increasing and decreasing (a thrust ratio peak) is detected and the thrust of the following pulley is controlled such that the thrust ratio approaches this point. This control makes it possible to maintain substantially maximum power transmission efficiency while preventing macro-slip of the belt 16.

In the following, specific examples of methods for determining a thrust control value based on the state of change of the thrust ratio (a thrust ratio peak) are described.

(i) Phase change is detected

This method utilizes a secondary or higher model for estimation of pulley thrust for thrust control and of the phase of a thrust ratio within a range of $\pm 180°$. A model parameter is estimated using a successive least squares method. It should be noted that a linear model can estimate a phase only within a range of $\pm 90°$.

Specifically, values forchangeof thrustwhenasinusoidal wave is input to pulley thrust are provided to an identifying model (secondary) and a model parameter is estimated using a successive least squares method. Using the estimated model parameter, the phase of the identifying model at a predetermined frequency is estimated.

It should be noted that a point at which the estimated phase (aphasedelay) changes by a predetermined amount or greater or reaches a predetermined value is determined as the peak of a thrust ratio, and that a region with an advancing phase than the peak is determined to be a region with the same phase, while a region with a lagging phase is determined to be a region with an opposite phase. A region with an opposite phase has excess thrust, while a region with the same phase does not.

When the estimated phase of the identifying model relative to the excitement frequency is the same phase, the pulley thrust (following pulley thrust: secondary thrust) may be controlled so as to reduce the thrust. When the phase is opposite, on the other hand, the pulley thrust may be controlled so as to increase the thrust.

(ii) Gain change is detected

A pulley thrust and a thrust ratio are input to a secondary or higher model, similar to the above method (i), and a model parameter is estimated using a successive least squares method. Then, againof the identifyingmodel at a predetermined frequency is obtained. A point at which the gain of the model changes from decreasing to increasing while the pulley thrust is decreasing is determined to be the peak of a thrust ratio.

That is, a region where the gain decreases or remains unchanged while the pulley thrust is decreasing has excess thrust, while the excess thrust is decreasing in a region where the gain increases while the pulley thrust is decreasing.

(iii) Phase and gain are both detected

Using a secondary or higher model, similar to the above (i) method, a model parameter is estimated using a successive least squares method. Then, the peak of a thrust ratio is obtained using both the phase and the gain of the identifying model at a predetermined frequency. That is, the peak of thrust is obtained according to the results of checks (i) and (ii). This method enables more preferable control.

(iv) Gradient 0 is detected

Change of thrust while pulley thrust is decreasing is observed so that a point at which the gradient of the thrust ratio becomes 0 is determined as the peak of the thrust ratio. A region wherein gradient of the thrust ratio increases while pulley thrust decrease is determined to be a region having excess thrust, while excess thrust decreases in region with a decreasing gradient of the thrust ratio.

(v) Maximum thrust ratio is detected

In this method, otherwise basically similar to the above (iv), change of thrust while pulley thrust is decreasing is observed so that the maximum of the thrust ratio is determined.

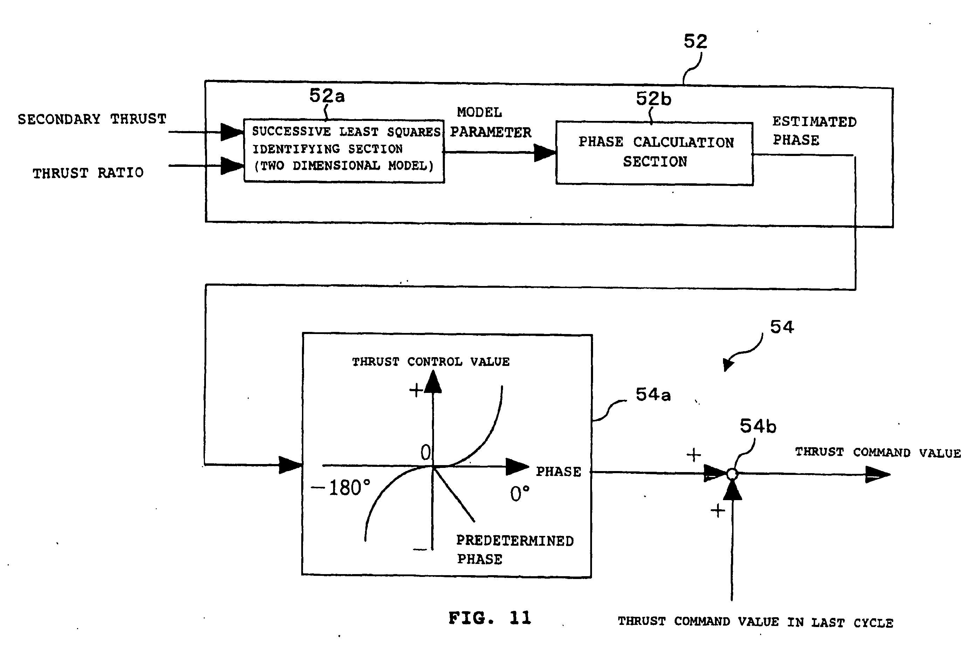

Among the above methods, the method (i) will be described with reference to Fig. 11.

Following pulley thrust and the calculated thrust ratio are input to a successive least squares identifying section 52a within the thrust ratio state of change identifying section 52, wherein a parameter of a secondary or higher identifying model is estimated using the least squares method. The estimated model parameter is input to a phase calculation section 52b, where a phase at a predetermined frequency is calculated using the estimated model parameter, the predetermined frequency corresponding to an excitement frequency.

It should be noted that the successive least squares method is not described here because it is a well-known method as described in, for example, "System Control Information Library 9, System Identification Introduction" pp. 71-86, by Asakura Shoten (1994/5).

The obtained estimated phase is input to a thrust control amount map 54a of the follower-side hydraulic pressure command value determination section 54. The thrust control amount map 54a, which stores in advance thrust control amounts (a hydraulic pressure) relative to phases, outputs a corresponding control amount in response to an input of an estimated phase. The output control amount is input to an adder 54b, wherein the control amount is added to a thrust command value in the last (one-previous) cycle to thereby obtain thrust command value (a hydraulic pressure command value).

As described above, advanced preparation of the thrust control amount map 54a allows determination of an appropriate hydraulic control amount relative to a concerned phase. In addition the method using a thrust control amount map 54a, a hydraulic control amount may alternatively be determined using a feedback control such as a PID control so as to maintain a target phase. Still alternatively, a method in which a point at which the gradient of the thrust ratio is 0 or at which the value of the gradient crosses the value 0 is detected may be preferably used. This method will be described below.

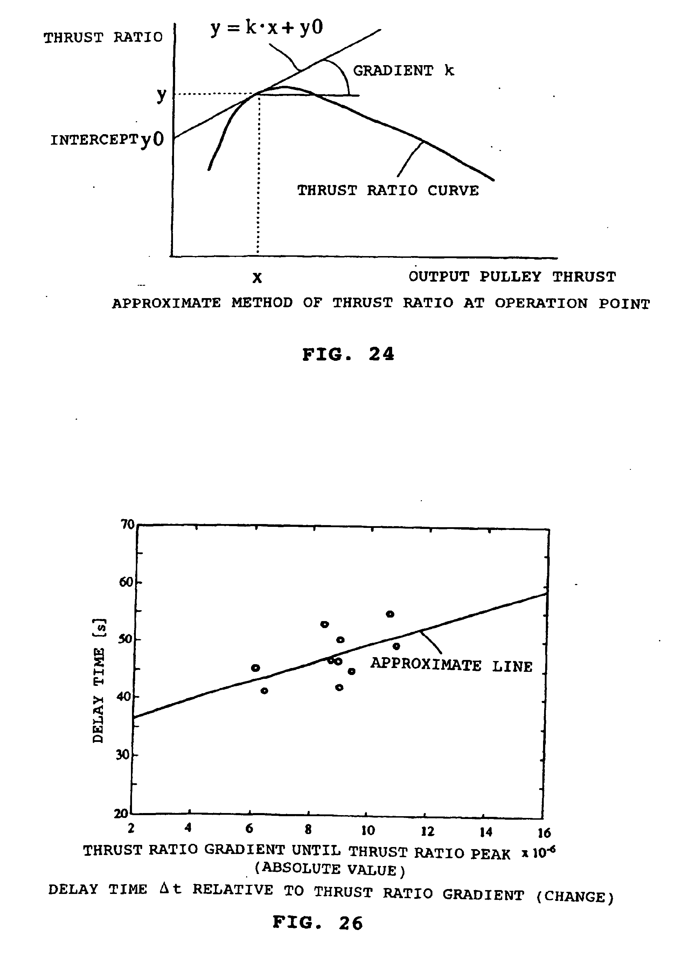

As shown in Fig. 24, the relationship between an output pulley thrust x and a thrust ratio y can be expressed as follows :

$$y = k \cdot x + y0$$

wherein k is the gradient of a tangent of the thrust ratio and y0 is an intercept.

The output pulley thrust x and a thrust ratio y can be obtained by determining the hydraulic pressure of a pulley cylinder, or the like, as described above. Based on signals x, y, the gradient k and intercept y0 at respective operation points are identified from time to time using a method of least squares and so forth. Detection of a point where the identified gradient is 0 enables detection of the peak of the thrust ratio curve and thus determination of output pulley thrust which achieves maximum transmission efficiency.

Identification of Gradient k and Intercept y0

A specific method for identifying gradient k and intercept y0 will next be described.

Initially, the above expression concerning a tangent is converted into an expression using time series data.

$$y(i) = [k(i)\, y0(i)] \cdot [x(i)\, 1]^T$$

wherein i represents a current sampling point and T represents transpose. This expression is then converted as follows:

$$y(i) = \theta_e(i)^T \cdot \xi(i)$$

wherein subscript e represents an estimated value. $\theta_e(i)$ and $\xi(i)$ on the right side are as follows:

$$\theta_e(i) = [k_e\, y0_e(i)]^T$$

$$\xi(i) = [x(i)\, 1]$$

Output pulley thrust x and a thrust ratio y are signals subjected to low-pass filtering to remove high frequency noise components. From the above three expressions, $\theta_e$ is calculated as follows using, for example, a fixed trace method as a least squares method:

$$\theta_e = \theta_e(i-1) - \Gamma(i-1) \cdot \xi(i)$$
$$\diagup (1 + \xi(i)^T \cdot \Gamma(i-1) \cdot \xi(i))$$
$$\cdot (\xi(i) \cdot \theta_e(i-1) - y(i))$$

$$\lambda(i) = 1 - \| \Gamma(i-1) \cdot \xi(i) \|^2$$
$$\diagup (1 + \xi(i)^T \cdot \Gamma(i-1) \cdot \xi(i)) \diagup tr(\Gamma(0))$$

$$\Gamma(i) = 1 \diagup \lambda(i)$$

$$\cdot (\Gamma (i-1) - \Gamma (i-1) \cdot \xi (i) \cdot \xi (i)^T \cdot \Gamma (i-1)$$

$$/ (1 + \xi (i)^T \cdot \Gamma (i-1) \cdot \xi (i))$$

Obtaining $\theta_e$ as above enables $k_e(i)$ and $y0_e(i)$ to be obtained.

High-pass filtering

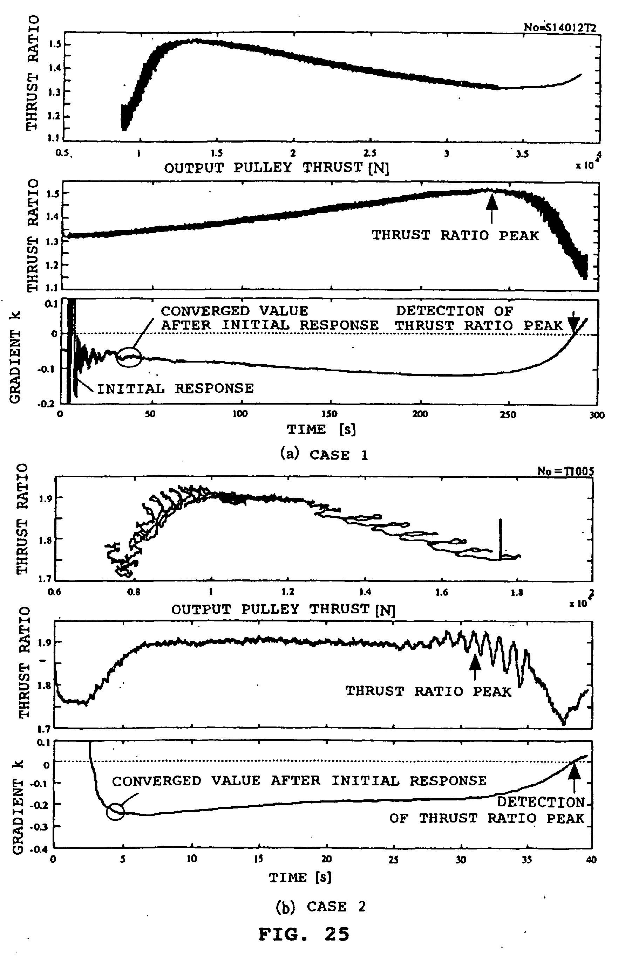

Fig 25 shows gradient k identified using signals of output thrust x and a thrust ratio y and the above mentioned three expressions. In the drawing are shown thrust ratios relative to output pulley thrust together with thrust ratios relative to time. In Fig. 25(b), the waveform of the thrust ratio along time is saw-toothed because sinusoidal torque disturbance is applied after about 27 seconds.

It can be seen from Fig. 25 that the thrust ratio peaks at around 240 seconds and that the identified gradient crosses the point 0 (peak detected time) at around 280 seconds in case 1, and at about 32 seconds and at about 38 seconds in case 2. That is, a delay time $\Delta t$ is observed between the peak of the thrust ratio and detection of the peak.

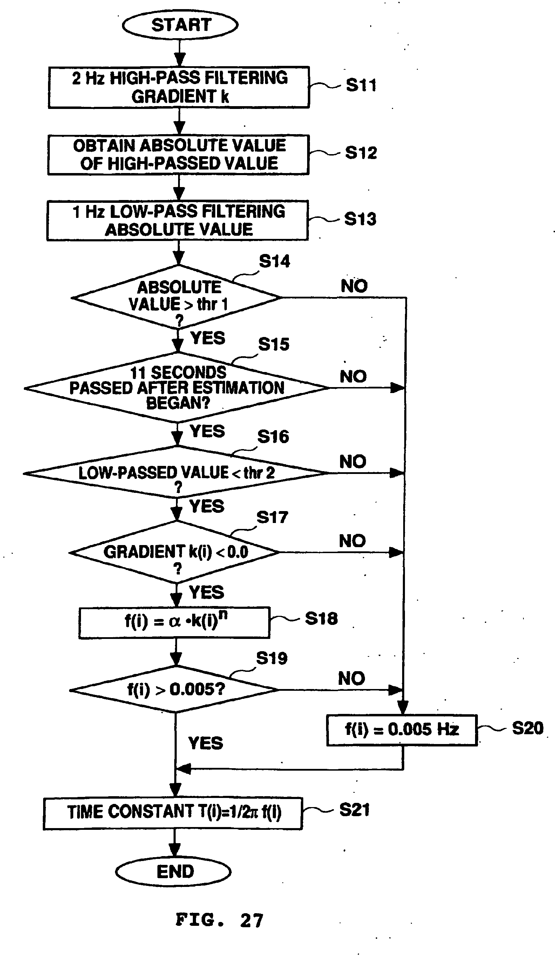

Fig. 26 is a diagram showing linear approximation of a thrust ratio curve relative to output pulley thrust from 0 seconds to a time of the peak based on the experimental data, in which the abscissa corresponds to absolute values of linear approximate coefficients and the ordinate corresponds to a delay time $\Delta t$. It can be seen from the drawing that the larger the approximate coefficient, the larger the delay time $\Delta t$. That is, the larger the changing of a thrust ratio, the larger the identification delay.

This identification delay of the gradient k is compensated for using a high-pass filter. It can be seen from Fig. 25 that the curve of a thrust ratio relative to output pulley thrust progresses with gradient K which smoothly changes until its peak value, and then sharply changes after the peak. A stationary value associated with the smoothing changing portion is removed through high-pass filtering to thereby extract just the sharply changing portion. However, because it is possible that outside disturbance or the like during the process of removing the stationary values may lead to overshooting of the peak thrust ratio, removal of a stationary value through high-pass filtering must be completed swiftly. The time required for the removal depends on the magnitude of the initial value and a time constant. After the initial response, gradient k converges to a certain value (an initial value). The value of conversion may depend on the conditions, as shown in Fig. 25.

For the example shown in Fig. 25(b), because the absolute value of the thrust ratio after the initial response is large, removal of the stationary value is expected to require a longer time. Thus, inorder to achieve, regardless of the initial value, prompt convergence to the vicinity of 0, the time constant of the high-pass filter is periodically varied according to the value of gradient k.

Fig. 27 shows a flowchart showing change of the time constant of a high-pass filter. Initially, high-pass filtering with a cut-off frequency 2 Hz (S11) is performed on gradient k; the absolute value of the high-passed value is obtained (S12); and the obtained absolute value is given low-pass filtering with a frequency 1 Hz (S13). Through this processing, the absolute value of gradient k at that time can be obtained.

Then, whether or not the absolute value is greater than or equal to the first threshold thr 1 is determined (S14) . When the determination is YES, whether or not t1 seconds have passed after the estimation begins is determined (S15). When the determination is again YES, whether or not the low-pass filter value is less than or equal to the second threshold value thr 2 is determined (S16).

When the determination is YES, whether or not gradient k (i) is negative is determined (S17). When once again the determination is YES, the cut-off frequency f(i) is set as:

$$f(i) = \alpha k(i)^n \ (S18)$$

wherein a is a value equal to or greater than 1 and n is a value equal to or greater than 1, for example, $\alpha=2$, N=2. This leads to setting of the cut-off frequency f(i) according to the magnitude of gradient k(i) at that time. Then, whether or not the cut-off frequency f (i) is greater than or equal to 0.005 is determined (S19). When the determination is NO for any of the determinations at S14, S15, S16, S17, S19, the cut-off frequency f (i) is set at 0.0005 Hz (S20).

Setting the cut-off frequency f (i) as described above results in setting of a time constant $T(i) = 1/2 \pi f(i)$ as a time constant of the high-pass filter (S21).

As a result, when the absolute value of gradient k is equal to or greater than thr 1, t1 secondhas passed since the estimation begins, and the low-passed value is equal to or less than thr 2, completion of the initial response is determined and f(i) of the high-pass filter is set at a large value according to gradient k.

Meanwhile, during the initial response, the time constant of the high-pass filter is set at an initial value, in this example, 31.83 seconds. Also when the absolute value of gradient k is equal to or less than thr 1 (near a converged stage), the time constant is set at an initial value, namely, 31.83 seconds. As described above, a delay time can be effectively compensated for using a high-pass filter.

High-pass filtering is carried out based on the following expressions using the time constant T(i) determined in the flow of Fig. 27:

$$k\_h(i) = F1(i) \cdot k\_h(i-1) + F2(i) \cdot (k(i) - k(i-1))$$

$$F1(i) = -(dt - 2 \cdot T(i)) / (dt + 2 \cdot T(i))$$

$$F2(i) = 2 \cdot T(i) / (dt + 2 \cdot T(i))$$

wherein k_h is a high-passed value of gradient k and dt is a sampling cycle.

Threshold Value Change

When, as described above, a high-pass filter is employed to compensate for a time delay in the gradient k, the peak of a thrust ratio is at a point where the gradient k is 0. However, a point of maximum transmission efficiency is determined based on whether or not the high-passed value (gradient k after high-pass filtering) is 0. Therefore, according to the present embodiment, whether or not the high-passed value exceeds a threshold value is determined. The threshold value Thr is determined using the following expression:

$$Thr = km + 4 \cdot k\sigma$$

For thr>0.02, thr=0.02

wherein km is an average (the minimum being 0) of high-passed values k_h of data for the past two seconds from the current moment (20 scores) and kσ is a standard deviation of k_h. Two seconds is twice the 1 second response cycle of CVT.

Detection of Maximum Transmission Efficiency Point

After completion of the initial response of the gradient k, whether or not the high-passed value exceeds the threshold value determined as above is determined to determine whether or not the thrust ratio is near its peak. As a result, a point of maximum transmission efficiency is detected.

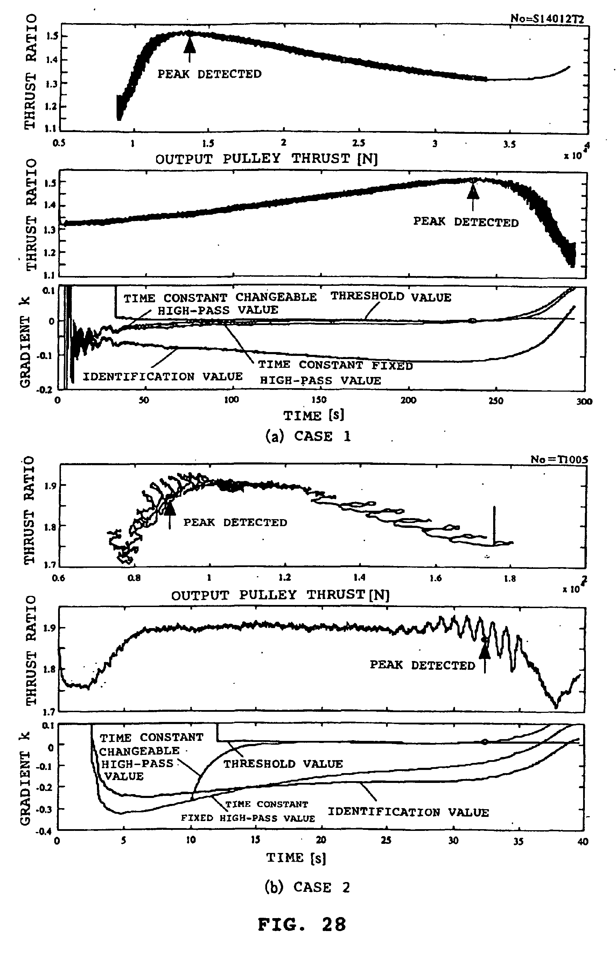

Fig. 28 is a diagram showing the results of determination of the peak of a thrust ratio according to the above processing. It can be seen from the drawing that the detection of the peak of a thrust ratio can be achieved with remarkable accuracy, regardless of the converged value after the initial response. As described above, a point of maximum transmission efficiency of a belt-type CVT can be determined.

It should be noted that in the above compensation using a high-pass filter of an identification delay of gradient k, the threshold can be determined according to the converged value of the initial response of gradient k.

Structure

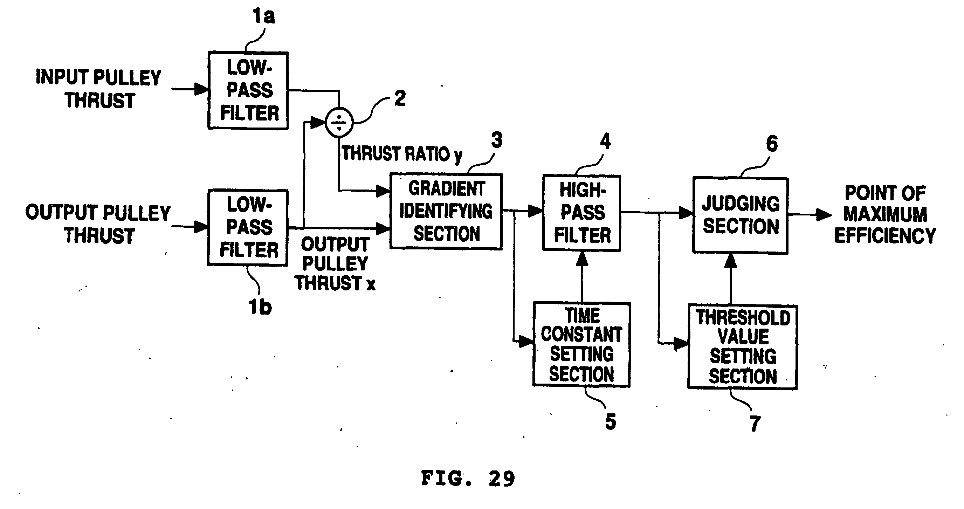

A device for detecting a point of maximum transmission efficiency based on the state of change of gradient k as described above will next be described with reference to Fig. 29.

Initially, input and output pulley thrust is determined in the respective determination circuits and supplied to the low-pass filters 1a, 1b, where high frequency noise is removed. The input and output pulley thrust subjected to low-pass filtering is then supplied to a division circuit 2, wherein the input pulley thrust is divided by the output pulley thrust to thereby calculate a thrust ratio.

The thrust ratio obtained in the division circuit 2 and an output pulley thrust subjected to low-pass processing in the low-pass filter 1b are then supplied to a gradient identifying section 3, where the gradient is determined from time to time. This processing is performed through estimation of gradient k (i) and intercept y0 using a least squares method or the like, as described above.

The obtained gradient k is supplied to the high-pass filter 4, wherein the gradient k is subjected to high-pass filtering with a predetermined time constant to thereby compensate for a delay time. Meanwhile, gradient k is also supplied to a time constant setting section 5, which sets a time constant of the high-pass filter 4 as described above.

The high-passed value of gradient k, obtained by the high-pass filter 4, is supplied to a judging section 6 to be compared with the above described threshold value Thr. When a high-passed value in excess of the threshold value Thr is determined, the peak of the thrust ratio is determined. It should be noted that the threshold value used in the judging section 6 is calculated in a threshold value setting section 7, as described above, and then set.

This structure enables detection of the peak of the thrust ratio, that is, a point of maximum transmission efficiency, based on the state of change of gradient k of the thrust ratio.

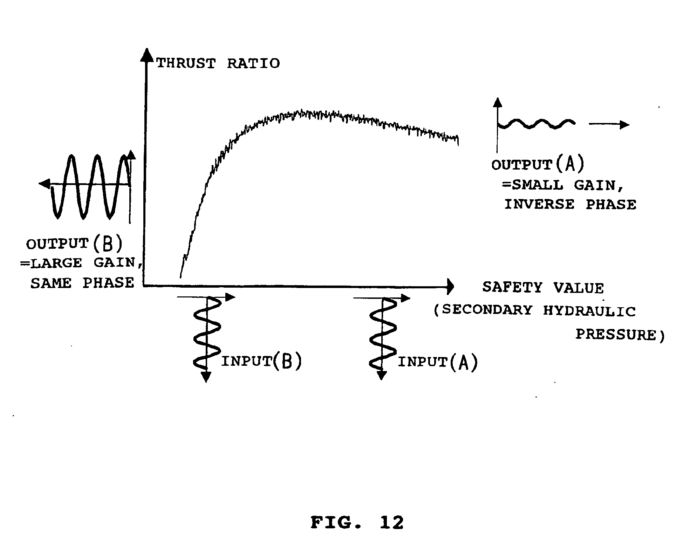

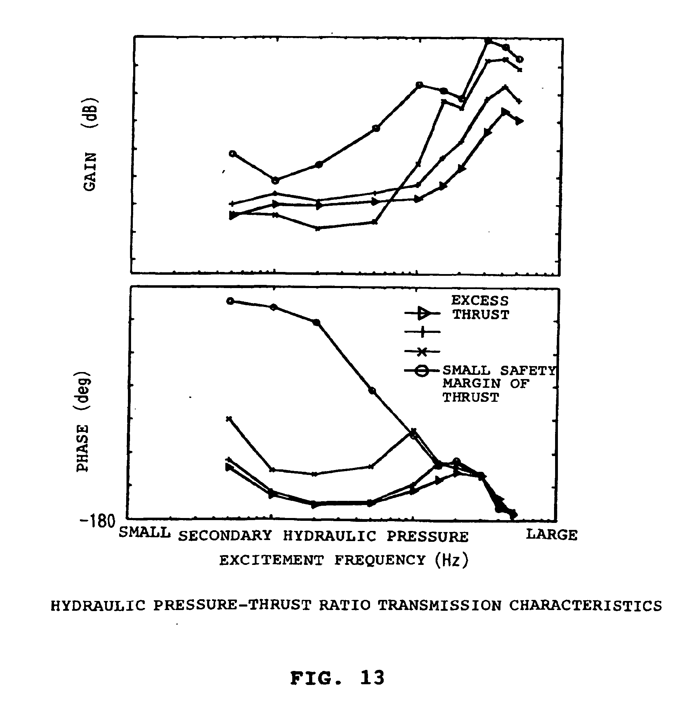

In the following, change of a thrust ratio caused when the following pulley thrust (hydraulic pressure) is excited by a sinusoidal wave will be described with reference to Figs. 12, 13.

Fig. 12 shows thrust ratios relative to following pulley thrust. As the thrust decreases, the thrust ratio gradually increases until it peaks, and thereafter sharply drops.

In the region in the drawing right of the peak, where excess thrust is available, a thrust ratio output (A) in response to a sinusoidal wave input (A) has a small gain and an opposite phase as shown. In the region left of, or after, the peak, on the other hand, a thrust ratio output (B) in response to a sinusoidal wave input (B) has a large gain and the same phase as shown. Therefore, this change may be detected by one or more of the methods (i) to (v) described above.

Here, Fig. 13 shows change of a gain (dB) and phase (dB) of the thrust ratio relative to an excitement frequency (a secondary hydraulic excitement frequency) applied to a following pulley thrust. It can be seen from the drawing that, relative to excitement frequencies of about 1 to 10 Hz, the gain and phase when the thrust ratio has passed its peak and excess thrust is thus not available differ from the gain and phase of other cases where the thrust ratio yet to pass the peak, and are therefore distinguishable. In particular, the peak of a thrust ratio can be readily determined relative to excitement frequencies of about 1 to 10 Hz.

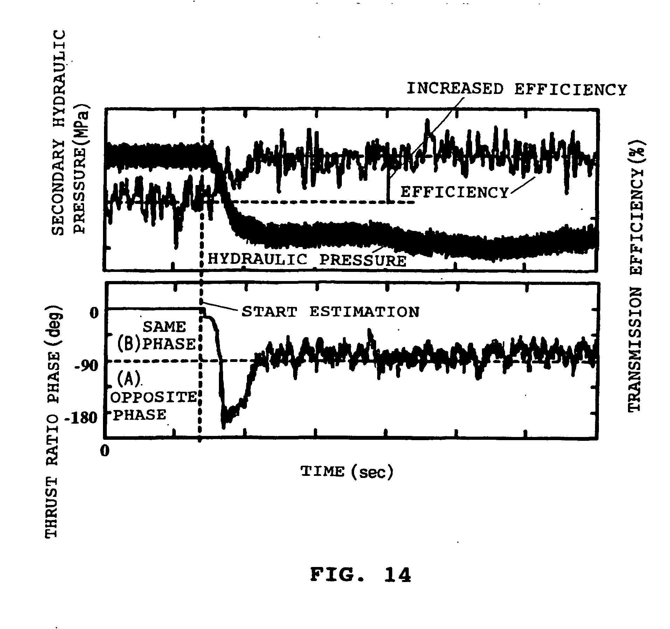

Fig. 14 shows results of an experiment in which the following pulley thrust was controlled such that the thrust ratio peaked. Beginning of control triggers phase estimation. Because sufficiently high following pulley thrust was initially ensured, an opposite phase then resulted. As the control began, the hydraulic pressure began decreasing and transmission efficient improved. From these results, it can be confirmed that controlling the phase of the thrust ratio to be -90° (a predetermined phase delay), or the boundary between the same phase and an opposite phase, can realize a hydraulic pressure having an appropriate value and improve the transmission efficiency.

Here, the hydraulic pressure (thrust) need not be intentionally excited, as the hydraulic pressure exciting section 56 is removed. That is, during actual control, the hydraulic pressure fluctuates at various frequencies, even when there is no active exciting section. Then, detection of a response with respect to a preferable frequency on the order of a few Hz (for example, 2 Hz) among those frequencies can realize processing similar to the above.

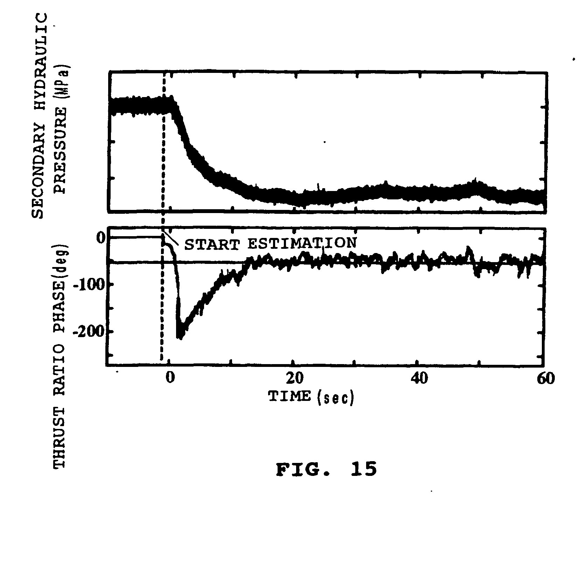

Fig. 15 shows a result of control performed using a structure without a hydraulic pressure exciting section 56. As shown, it is possible to control the thrust of the following pulley 18 such that the thrust ratio is maintained at its peak even through the hydraulic pressure is not actively excited.

Examples of Other Structures

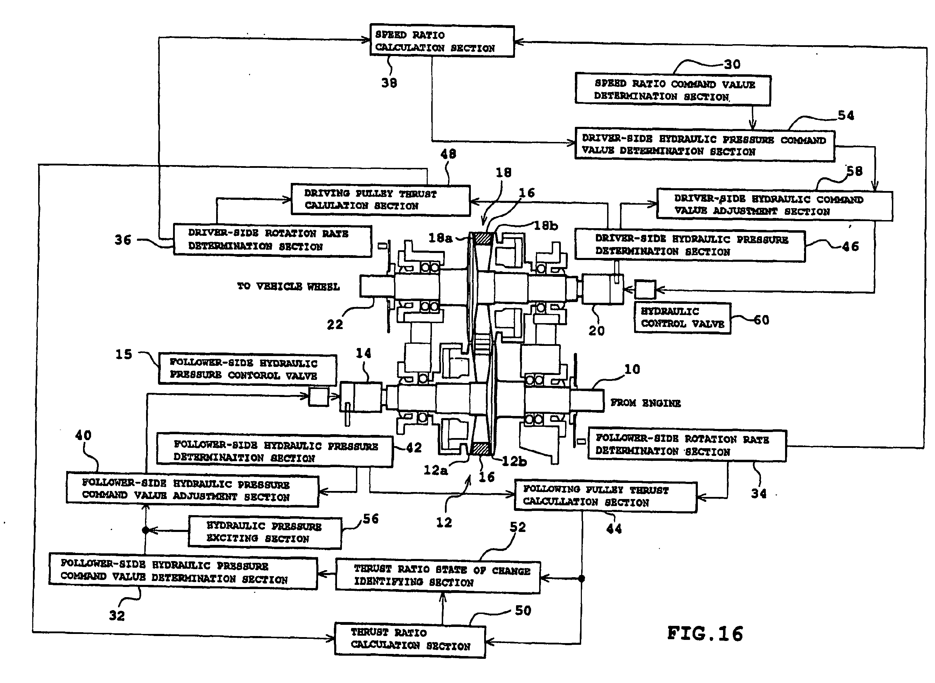

Fig. 16 shows an example of a structure for controlling a speed ratio using the following pulley. In the example of Fig. 16, the speed ratio is controlled using the following pulley 12 so that the thrust of the driving pulley 12 is controlled by the driving pulley 12 such that the thrust ratio is maintained at its peak.

For this purpose, the follower-side hydraulic pressure command value determination section 54 determines a follower-side hydraulic pressure command value based on signals from the speed ratio command value determination section 30 and the speed ratio calculation section 38. Meanwhile, the thrust ratio state of change identifying section 52 identifies the state of change of the thrust ratio with respect to change of the thrust on the driver-side 12, based on the thrust ratio supplied from the thrust ratio calculation section 50 and the driving pulley thrust supplied from the driving pulley thrust calculation section 44. Then, based on the identification result, the driver-side hydraulic pressure command value determination section 32 determines a driver-side hydraulic pressure. Further, an excitement signal from the hydraulic pressure exciting section 56 is added to the driver-side hydraulic pressure command value, whereby the driver-side hydraulic pressure is excited.

As described above, in this embodiment, a driver-side hydraulic pressure is controlled to thereby control driver-side thrust such that the thrust ratio approaches close to its peak. The advantages of the above embodiment can thereby be achieved.

It should be noted that either of the driving or following pulley 12, 18 can be desirably selected for use in determining a speed ratio for thrust control. This arrangement is introduced to any of the following embodiments.

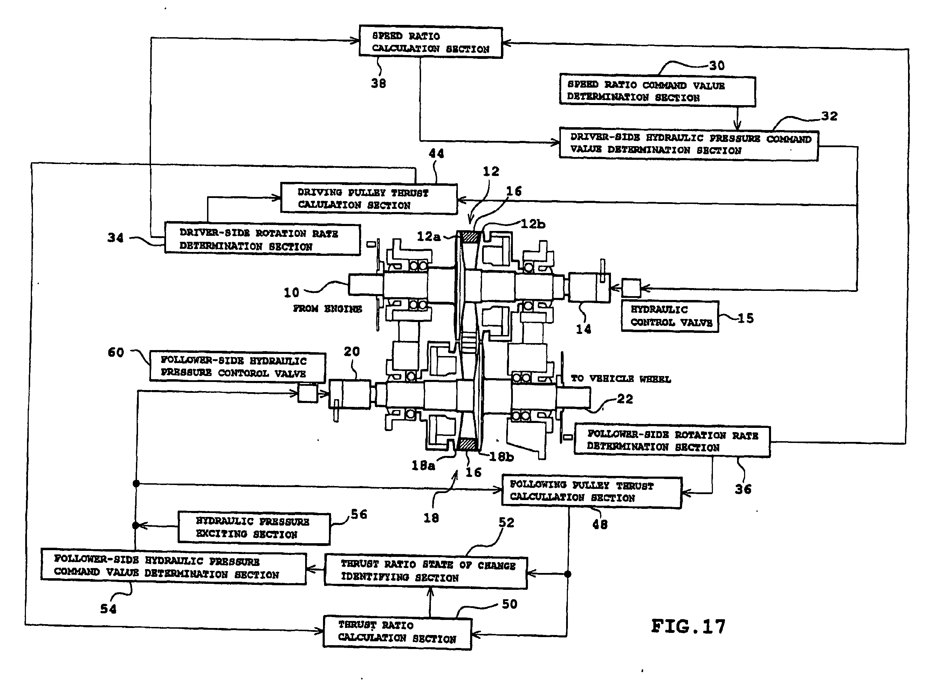

Fig. 17 is a diagram showing an embodiment in which a hydraulic pressure command value is used in thrust estimation. In this embodiment, the follower-side hydraulic pressure determination section 46 and the driver-side hydraulic pressure determination section 42 is not provided. Because a determined hydraulic pressure value is not available and feedback control based on the determined value is therefore not possible, the driver-side hydraulic pressure command value adjustment section 40 and the follower-side hydraulic pressure command value adjustment section 58 are also eliminated.

Instead, a hydraulic pressure command value supplied to the follower-side hydraulic pressure control valve 60 is also supplied to the following pulley thrust calculation section 48, while a hydraulic pressure command value supplied to the driver-side hydraulic control valve 15 is also supplied to the driving pulley thrust calculation section 44.

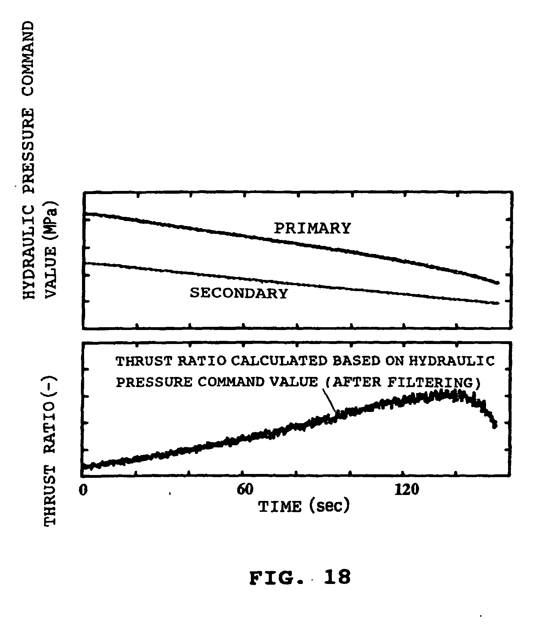

Fig. 18 shows relationships between hydraulic pressure command values and thrust ratios. As shown, gradual decrease in hydraulic pressure command value causes a thrust ratio to change. That is, it is understood that a hydraulic pressure command value can be handled substantially equivalent to a determined hydraulic pressure value. It should be noted that the hydraulic pressure command value is subjected to low-pass filtering whereby high frequency components are removed.

As described above, the use of a hydraulic pressure command value instead of a value of a hydraulic pressure can provide similar advantages.

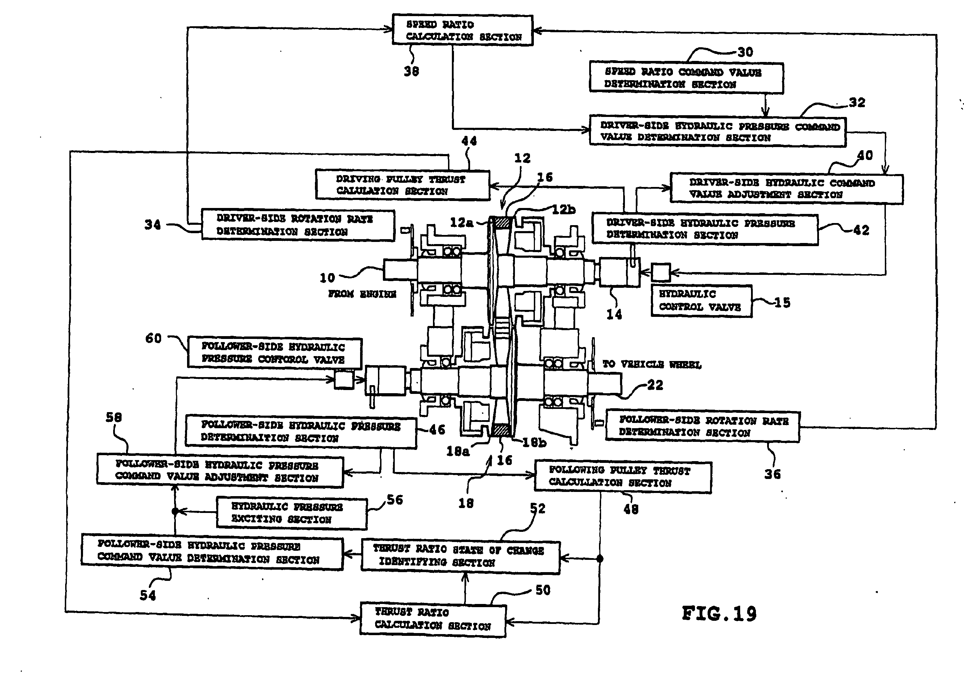

Fig. 19 shows an example of a structure for use when the rotation fluctuation can be assumed to be small. In this structure, supply to the driving pulley thrust calculation section 44 of the rate of rotation supplied form the driver-side rotation rate determination section 34 is omitted, as is supply to the following pulley thrust calculation section 48 of the number of rotations supplied from the follower-side rotation rate determination section 36. Thus, driving pulley thrust calculation section 44 and following pulley thrust calculation section 48 calculate pulley thrusts without consideration of the rate of rotation. This is not problematic because the rate of rotation is very small. This method can remarkably reduce a computation load and is preferable for use during low speed operation.

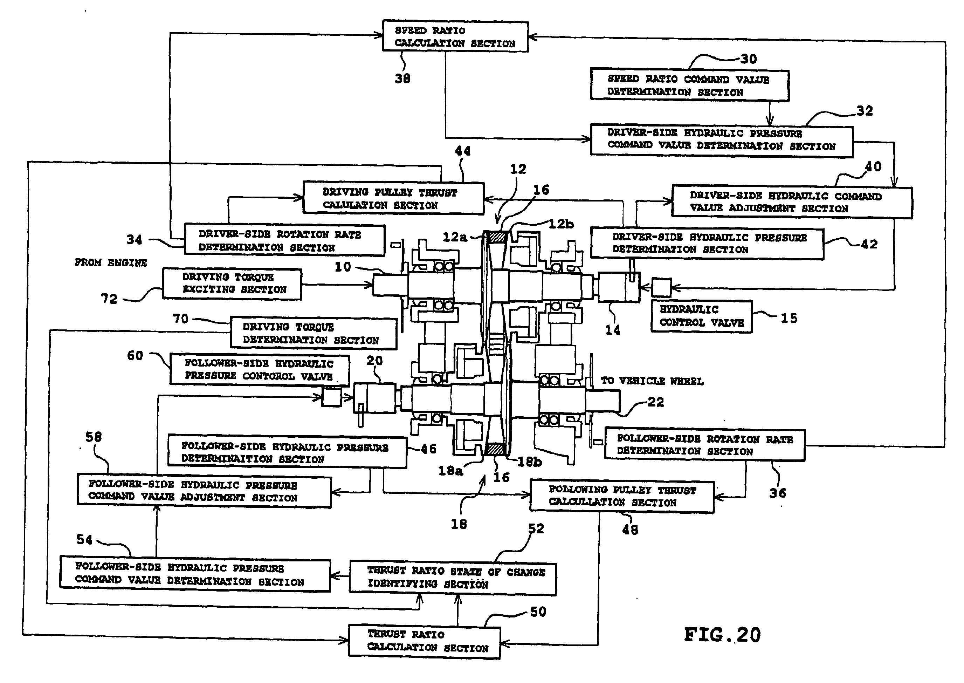

Fig. 20 is a diagram showing an example of a structure for controlling, utilizing fluctuation of a driving torque, such that a thrust ratio peaks. In this embodiment, a driving torque, which is transmitted through the input axis 10, is determined by a driving torque determination section 70 and given excitement of a few order Hz by a driving torque exciting section 72.

The thrust ratio state of change identifying section 52 calculates a suitable pulley thrust based on the state of change of a thrust ratio relative to changing of a driving torque. That is, whereas in the above example the relationship between a pulley thrust and a thrust ratio is determined based on the assumption that a driving torque is constant, providing a predetermined fluctuation to the driving torque to measure response of the thrust ratio relative to that fluctuation can be equivalent to fluctuating pulley thrust to ascertain change of the thrust ratio. That is, increasing a driving torque is equivalent to reducing pulley thrust.

Then, pulley thrust is controlled based on the state of change of a thrust ratio caused by increasing the driving torque, whereby a peak thrust ratio can be maintained. Here, because the relationship between the phase of a driving torque, or an input, and that of a thrust ratio, or an output, is opposite from that of Fig. 1, when the phase of excitement applied to the driving torque and that of the thrust ratio, or an output, are identical, it can be understood that an excess thrust exists and the thrust should be reduced. On the other hand, when the phases are opposite, it can be understood that thrust is insufficient and that the thrust should be increased.

With this configuration, intentional excitement of driving torque is again not required, and the driving torque exciting section 72 can be omitted.

Whereas the driving torque is caused to fluctuate in the example of Fig. 20, the pulley thrust can be controlled based on change of a thrust ratio due to ground surface disturbance.

Specifically, when a load torque acting on a tire due to disturbance from the ground is determined and change of a thrust ratio relative to the determined load torque is determined, a pulley thrust can be controlled based on the relationship between changing of the thrust ratio and the thrust ratio. This method is basically the same as a method in which a driving torque is made fluctuating.

When the rate of rotation of a tire is reduced due to ground disturbance, the rate of rotation of the following pulley is also reduced, which then reduces centrifugal hydraulic pressure. The reduction of the rate of rotation corresponds to reduction of pulley thrust. Then, the relationship between change of the rate of rotation of a tire or following pulley and change of the thrust ratio may be set to control the pulley thrust such that the thrust ratio can be maintained at a predetermined value. Here, it should be noted that the thrust of a driving pulley is controlled to control the speed ratio.

Although in the above examples, thrust ratio is controlled so as to be maintained at its peak, a ratio of average friction coefficients (an average friction coefficient ratio) can be employed instead of the thrust ratio.

Respective variables are defined as follows: Ti = an input torque, $\mu$p = an average friction coefficient between a driving pulley and a belt, Fp = thrust of a driving pulley, Rp = a belt hanging diameter in the driving pulley, Ip = rotational inertia of the driving pulley, dNp = rotational acceleration of the driving pulley, T = torque transmitted by the belt, $\mu$s = an average friction coefficient between the following pulley and belt, Fs = thrust of a following pulley, Rs = a belt hanging diameter in the following pulley.

In this case,

(expression 1)

$$T i = I p \cdot d N p + \mu p \cdot F p \cdot R p = I p \cdot d N p + T$$

$$T = \mu s \cdot F s \cdot R s$$

$$\mu p = (T i - I p \cdot d N p) \diagup (F p \cdot R p)$$

$$\mu s = (T i - I p \cdot d N p) \diagup (F s \cdot R s)$$

The average friction coefficient ratio will be

(expression 2)

$$\mu s \diagup \mu p = F p \cdot R p \diagup F s \cdot R s = (F p \diagup F s) \cdot (R p \diagup R s)$$

Because the ratio between hanging diameters, or Rp/Rs, is constant when a constant speed changing ratio is assumed, the thrust ratio Fp/Fs is proportional to the average friction coefficient ratio $\mu$s/$\mu$p. Therefore, an average friction coefficient ratio can replace the thrust ratio.

That is, the use of the ratio of average friction coefficients instead of a thrust ratio can also realize control to achieve optimum pulley thrust as described above. In particular, the use of the ratio of average friction coefficients can cancel changing of the thrust ratio which would be caused when the speed changing ratio is changed. That is, when the ratio of hanging diameters is considered, the ratio of average friction coefficients should be referred to regardless of the value of the speed changing ratio.

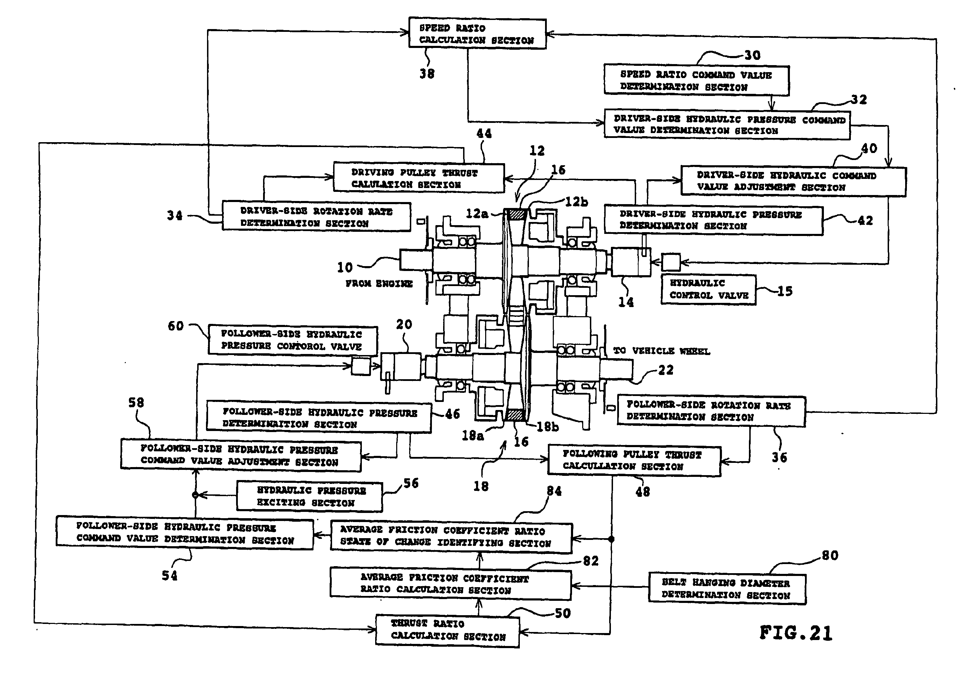

Fig. 21 shows a structure for controlling pulley thrust based on the ratio of averaged friction coefficients. A belt hanging diameter determination section 80 determines belt hanging diameters of the driving pulley 12 and the following pulley 18, respectively.

Specifically, the belt hanging diameter determination section 80 may determine the position of the top of the belt block as a belt hanging diameter, which can be measured using a non-contact displacement measurement device of an optical or magnetic type. Alternatively, because the distance between sheaves is determined by the position in the axial direction of the pulley and the belt hanging diameter can be determined based on that distance, the position of the pulley in the axial direction may be measured. Still alternatively, calculations may be based on a speed changing ratio.

The value determined by the belt hanging diameter determination section 80 is supplied to an average friction coefficient ratio calculation section 82. The friction coefficient ratio calculation section 82, which also receives a thrust ratio from the thrust ratio calculation section 50, replaces the thrust ratio with the average friction coefficient ratio based on expression 2. The resulting average friction coefficient ratio is supplied to an average friction coefficient ratio state of change identifying section 84, where the pulley thrust is controlled such that the average friction coefficient ratio is located near its peak. This estimation method can be performed similar to the calculation of the peak of a thrust ratio described above. Then, data concerning the peak of the average friction coefficient ratio is supplied to the follower-side hydraulic pressure command value determination section 54, where a hydraulic pressure command value is determined.

As described above, the use of an average friction coefficient ratio enables control so as to achieve optimum pulley thrust, even when the speed changing ratio varies.

Further, where the peak of a thrust ratio or average friction coefficient ratio is determined so that pulley thrust is controlled such that the thrust ratio or average friction coefficient ratio peaks, the relationship between these may be stored in a map so that the optimum thrust can be directly output according to the various conditions which govern a thrust ratio. This map is preferably rewritten through learning, according to the peak of thrust ratio which is calculated based on actual running conditions. This guarantees a higher speed response and allows control of a pulley thrust ratio such that the thrust ratio or average friction coefficient ratio peaks, similar to a case wherein control is executed through computation.

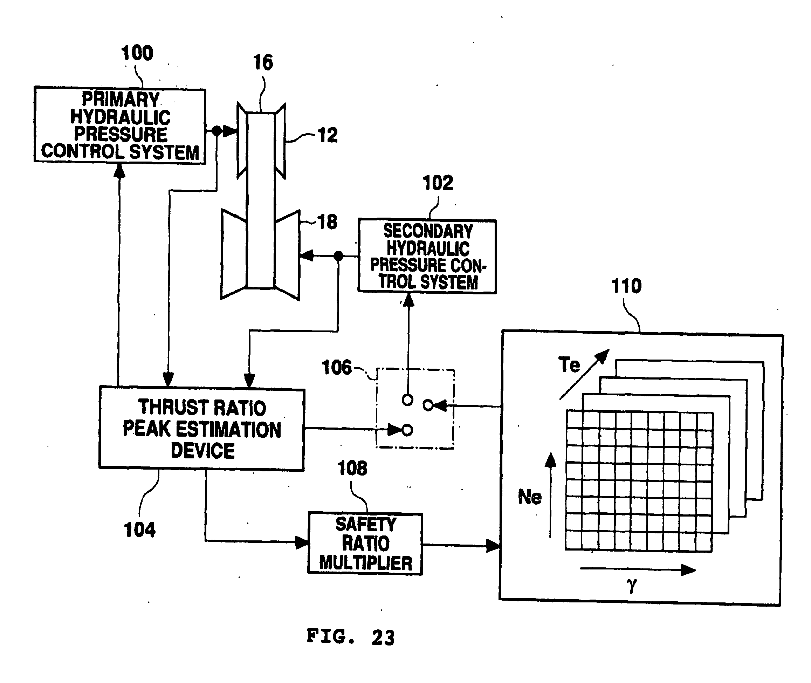

Fig. 23 is a diagram showing a pulley thrust control capable of amending the control map using a thrust ratio peak estimation method, the control being applied to a control system wherein a hydraulic pressure command value for controlling a pulley thrust is given as a control map including arguments such as an engine rotation speed Ne, an engine torque Te, a speed changing ratio $\gamma$, and so forth. In this example, hydraulic pressure (primary hydraulic pressure) control for controlling a speed ratio (a speed changing ratio) is performed using the driving pulley 12, while hydraulic pressure (secondary hydraulic pressure) control for controlling pulley thrust is performed using the following pulley 18.

A primary hydraulic pressure from the primary control system 100 which controls the primary hydraulic pressure according to the speed changing ratio (a speed ratio) is supplied to the driving pulley 12. Meanwhile, the secondary hydraulic pressure from the secondary hydraulic pressure control system 102 is supplied to the following pulley 18.

The primary and secondary hydraulic pressures are then supplied to a thrust ratio peak estimation device 104, which determines the state of change of the thrust ratio based on these hydraulic pressures and estimates a secondary hydraulic pressure corresponding to the peak of the pulley thrust ratio. The estimated secondary hydraulic pressure command value which corresponds to the peak of a thrust ratio is supplied to a switch 106.

Meanwhile, an output from the thrust ratio peak estimation device 104 is multiplied by a safety rate (a number slightly greater than 1) in a safety ratio multiplier 108 before being supplied to a control map (a secondary hydraulic pressure control map) 110. Using an engine rotation speed Ne, an engine torque Te, and a speed changing ratio y as an argument, the control map 110 outputs a secondary hydraulic pressure command value which corresponds to the peak of the thrust ratio. Then, the control map is amended based on the relationship between the value (the secondary hydraulic pressure command value) supplied from the thrust ratio peak estimation device 104 and a secondary hydraulic pressure command value to be output. An output of the control map 110, or the secondary hydraulic pressure command value, is supplied to the switch 106.

The switch 106 selects a secondary hydraulic pressure command value from the thrust ratio peak estimation device 104 only during the period when the thrust ratio peak estimation device 104 is performing estimation and supplies a secondary hydraulic pressure command value from the control map 110 to a secondary hydraulic pressure control system 102 during other periods.

For actual use in control in a vehicle, use of the control map 110 facilitates control of a secondary hydraulic pressure and, thus, this control system is generally employed during running.

However, because of differences unique to each vehicle, a general control map cannot be employed without amendment. Thus, the peak of a thrust ratio is estimated from a predetermine test running and the control map 110 is amended based on the results of the test. The amended control map 110 is employed during subsequent operation of the vehicle to control the secondary hydraulic pressure.

Moreover, because the characteristics of a vehicle may change over time, the estimation by the thrust ratio peak estimation device 104 may be periodically performed for updating and amending of the control map 110.

An example of such amendment of the control map 110 will next be described.

During general operation, a value from the control map 110 is used as a command value (a secondary hydraulic pressure command value) for a hydraulic pressure which controls pulley thrust. Estimation is desirably performed using the thrust ratio peak estimation device 104, the procedure being identical to that performed when amending to account for the uniqueness of each vehicle.

During learning (while a thrust peak is being estimated), the switch 106 selects a secondary hydraulic pressure command value from the thrust ratio peak estimation device 104. Then, while slowly changing the hydraulic pressure command value into, for example, a ramp wave shape so that the pulley thrust gradually drops, the state of change of the pulley thrust ratio is observed and the hydraulic pressure command value when the thrust ratio peaks is recorded.

The peak of the pulley thrust ratio may be detected based on changes in a gradient of the pulley thrust ratio. Alternatively, a point at which the estimated phase reaches a predetermined value or greater may be determined as the peak. Still alternatively, a point at which the estimated phase changes by a predetermined amount or greater may be determined as the peak.

Upon completion of the recording of the hydraulic pressure command value, the switch 106 switches so as to employ a value from the secondary hydraulic pressure control map 110 as a hydraulic pressure command value, and the value in the control map 110 to be referred to when the thrust ratio peaks (a value to be output from the control map 110) is written into a value obtained by multiplying the recorded control command value by a predetermined safety value.

As described above, the control map 110 can be rewritten based on the state at that moment and a suitable control map 110 can be maintained.

In the following, another embodiment of the present invention will be described.

In this embodiment, an initial control map is created offline at a time, such as during production in a factory, rather than while the vehicle is in actual operation. That is, an example in which a belt clamping force (thrust of primary pulley or secondary pulley) of a CVT using a metallic belt is set offline will be described. It should be noted that, also in this embodiment, primary thrust (thrust of primary pulley) is controlled for controlling a speed changing ratio and secondary thrust (thrust of secondary pulley) is controlled for controlling a belt clamping force. Therefore, a belt clamping force corresponds to the secondary thrust in this embodiment.

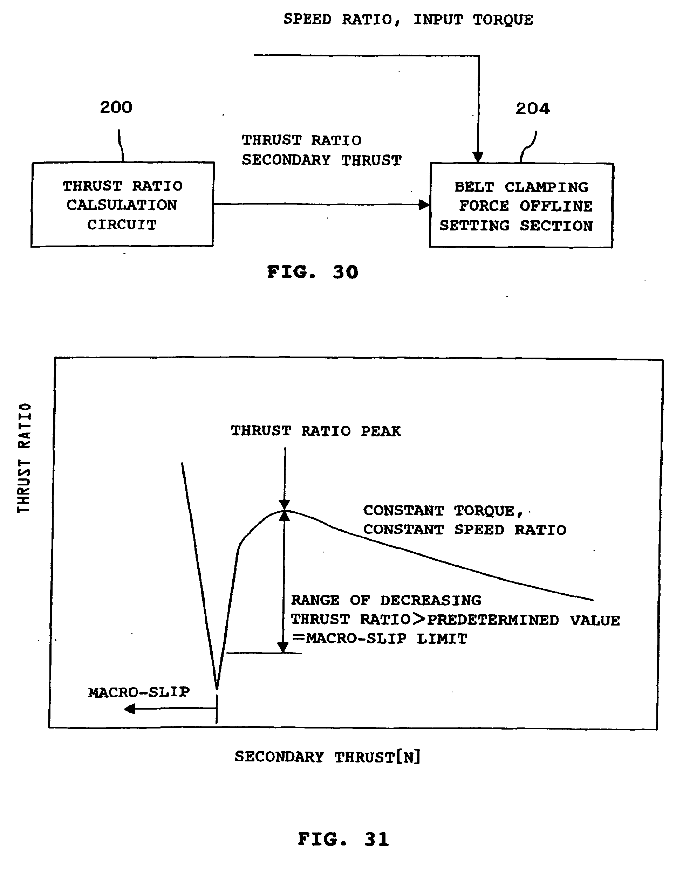

Fig. 30 shows major components of this embodiment. As described in the preceding embodiments, a thrust ratio calculation circuit 200 is provided for calculating a thrust ratio. A thrust ratio calculated in the thrust ratio calculation circuit 200 and the thrust of the follower-side pulley (secondary pulley) are supplied to a belt clamping force off-line setting section 204.

When a belt clamping force (secondary thrust) of a metallic belt-type CVT is decreased while maintaining substantially constant input torque and a substantially constant speed changing ratio, the thrust ratio first becomes large and then begins decreasing immediately before belt slip occurs, as shown in Fig. 31. As can be seen, the thrust ratio peaks near the maximum efficiency point.

Once macro-slip occurs, the rate of rotation on the output side (a secondary pulley) decreases and, because the thrust ratio control system then increases the primary thrust in order to maintain the speed ratio, the thrust ratio begins sharply increasing.

A point at which the thrust ratio begins sharply increasing defines a limit at which macro-slip begins to occur. That is, the maximum friction coefficient between the belt and the pulley can be calculated based on the input torque, the secondary thrust, and the speed ratio at that point.

The use of the thus obtained maximum friction coefficient enables calculation of the minimum required belt clamping force (secondary thrust). Then, addition of a required excess clamping force to the minimum required belt clamping force enables setting of an appropriate belt clamping force (secondary thrust). Thus, appropriate secondary thrust can be determined based on the obtained maximum friction coefficient. While using as arguments an engine rotation speed, engine torque, a speed changing ratio, and so forth, used when the vehicle runs, a control map for obtaining optimum secondary thrust can be created.

In addition, estimation of the maximum friction coefficient is possible without causing macro-slip. In this case, a point at which the thrust ratio has decreased from its peak by a predetermined value is determined as a macro-slip limit (a start point of macro-slip), which is located slightly earlier than the point at which macro-slip actually occurs. However, the range of error of the calculated maximum friction coefficient is sufficiently small that a practicable control map can be created.

Conventionally, when increasing the torque with a belt winding around a device having a fixed pulley ratio, the maximum friction coefficient between the belt and the pulley is obtained based on the torque when the slip ratio exceeds a predetermined value, and a belt clamping force (secondary thrust) is calculated based on the obtained maximum friction coefficient. In this conventional case, however, because a device with a fixed pulley ratio is used, discrepancy between the generated value and the maximum friction coefficient of an actual vehicle may result due to a difference in posture of the pulley with torque applied. Moreover, because experiments to cause belt slipping are repeated, it takes time to obtain the maximum friction coefficient.

In this embodiment, an appropriate belt clamping force (secondary thrust) can be set in a short time because actual CVT speed changing unit and the same method as that to be used with an actual vehicle are employed.

Next, a specific method for setting offline a belt clamping force will be described.

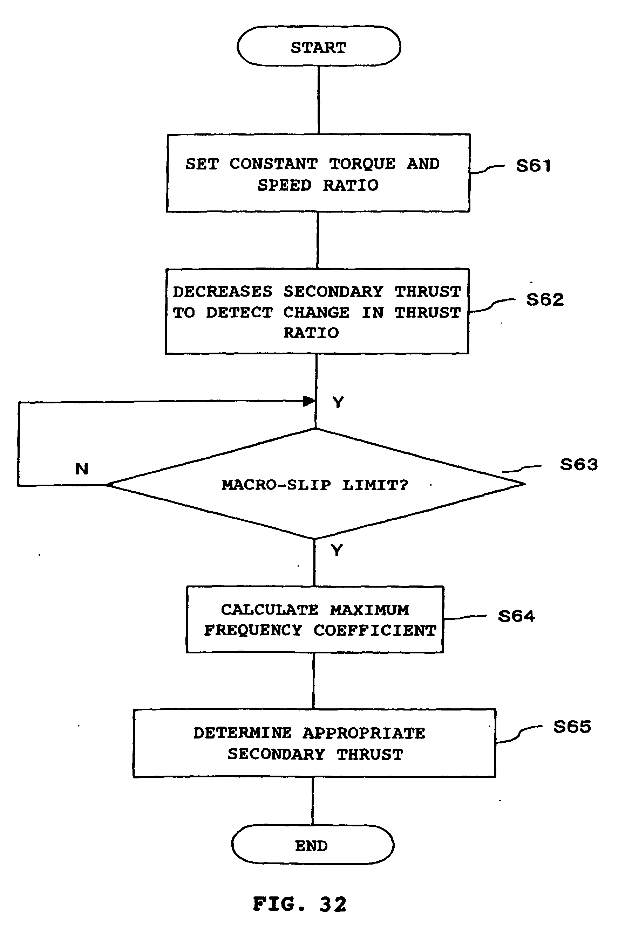

As shown in Fig. 32, substantially constant torque (constant input torque) and a substantially constant speed changing ratio are set (substantially constant input torque and a substantially constant changing ratio) (S61). Then, while decreasing the secondary thrust, a change in the thrust ratio is detected (S61). A limit at which macro-slip begins to occur is determined based on a point at which the thrust ratio having passed it peaks switches to increasing or has decreased by a predetermined value (S63). When a macro-slip limit is determined, the maximum friction coefficient is calculated based on the determination (S64) and appropriate secondary thrust is determined based on the calculated maximum friction coefficient (S65). Here, calculation of the maximum friction coefficient and setting of a belt clamping force (secondary thrust) are applied using any methods described below.

(i) While determining a point at which the thrust ratio (primary thrust/secondary thrust) decreasing after passing its it peak begins sharply increasing as a macro-slip limit, a belt clamping force (secondary thrust) control map is created by multiplying the secondary thrust at that point by a safety rate.

(ii) While determining a point at which the thrust ratio (primary thrust/secondary thrust) decreasing after passing its peak begins sharply increasing as a macro-slip limit, the maximum friction coefficient is obtained based on the secondary thrust, input torque, and a speed ratio at that point. And the minimum required secondary thrust is obtained based on the obtained maximum friction coefficient, and required excess thrust is added to the resultant minimum required second thrust to thereby calculate a belt clamping force (secondary thrust).

(iii) While determining a point at which the thrust ratio (primary thrust/secondary thrust) has decreased after passing its peak by a predetermined value as a macro-slip limit, a belt clamping force (secondary thrust) control map is created by multiplying the secondary thrust at that time by a safety rate.

(iv) While determining a point at which the thrust ratio (primary thrust/secondary thrust) has decreased after passing its peak by a predetermined value as a macro-slip limit, the maximum friction coefficient is obtained based on the secondary thrust, input torque, and a speed ratio at that time. Then, the minimum required secondary thrust is calculated using the obtained maximum friction coefficient, and required excess thrust is added to the resultant minimum required secondary thrust to thereby calculate a belt clamping force (secondary thrust).

(v) A belt clamping force (secondary thrust) control map is created by multiplying the secondary thrust at a point where the thrust ratio (primary thrust/secondary thrust) peaks by a preferable safety value (greater than or equal to one).

In the following, still another embodiment will be described. In this embodiment, a change in the friction coefficient between the belt and the pulley (the maximum friction coefficient) is detected. That is, a belt winds around the driving and following pulleys so that a torque is transmitted via the belt. This belt is generally made of metal, comprising a plurality of blocks tightened up by a hoop. Each block contacts each pulley via CVT oil and a torque is transmitted between the belt and the pulley using friction force between the block and the pulley.

The surface condition of the belt (specifically, blocks) may change over use. In addition, condition of the CVT oil (oil used in a CVT) between the block and the pulley also may change over time. Therefore, a friction coefficient between the belt and the pulley is likely to change over time.

A change in the friction coefficient causes that timing at which the belt slips to change. Therefore, it is preferable that thrust control be changed according to a change in the friction coefficient. In this embodiment, a friction coefficient between the belt and the pulley is determined.

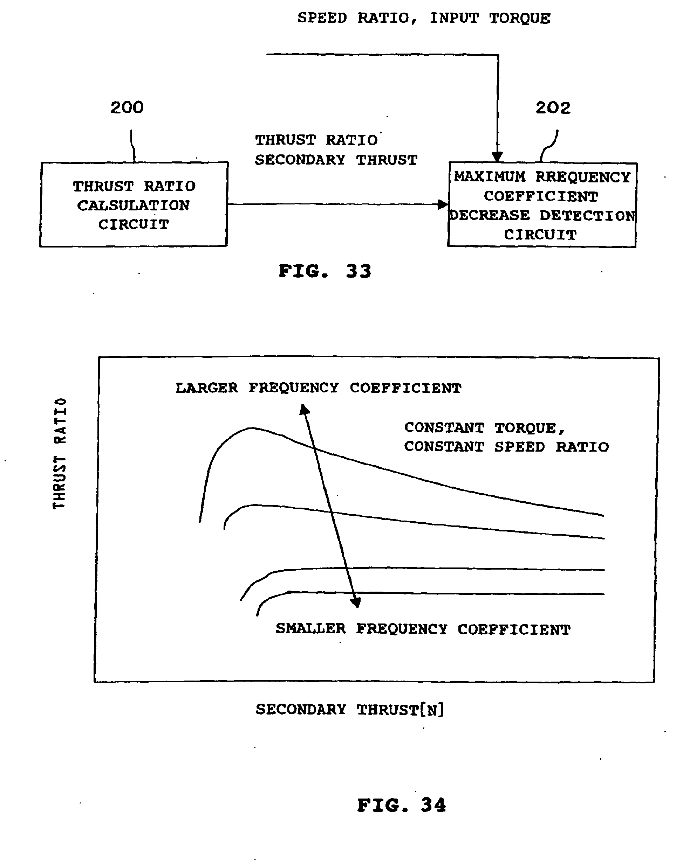

Fig. 33 shows major elements in this embodiment. As described in the preceding embodiments, there is provided a thrust ratio calculation circuit 200 for calculating a thrust ratio. The thrust ratio calculated by the thrust ratio calculation circuit 200 and the thrust of the follower-side pulley (secondary pulley) are supplied to a maximum friction coefficient decrease detection section 202. It should be noted that, also in this embodiment, primary thrust is controlled for controlling a speed changing ratio and secondary pulley thrust is controlled for controlling a belt clamping force.

The maximum friction coefficient decrease detection circuit 202, which also receives a speed ratio, input torque, and so forth, detects a decrease in the friction coefficient between the belt and the pulley based on the information input.

A sufficiently large coefficient of friction is ensured between the belt and the pulley when a metallic belt and CVT oil are in an initial state and the oil temperature is within an appropriate range. Under such conditions, decreasing the secondary thrust while maintaining substantially constant input torque and a substantially constant changing ratio causes the thrust ratio to become larger and, immediately before the belt slip occurs, to begin decreasing, as shown in Fig. 34. As a result, the thrust ratio has a peak as described above.

Here, when the friction coefficient between the belt and the pulley decreases due to change over time of the CVT or a change in the oil temperature, the amount of change in the thrust ratio relative to a change in the secondary thrust becomes smaller, as shown in Fig. 34. When the friction coefficient decreases below a certain value, the thrust ratio no longer exhibits a peak at any point. Moreover, the value of the thrust ratio becomes smaller as the thrust ratio decreases.

Therefore, a decrease in the friction coefficient between the belt and the pulley is detectable through comparison of a change in the thrust ratio caused by a change in_the secondary thrust with that of a reference item (a brand new item). Moreover, the fact that the peak of the thrust ratio becomes undetectable allows determination of the fact that the friction coefficient has decreased below a limit.

In view of the above, in this embodiment, a decrease in the friction coefficient is detected as follows.

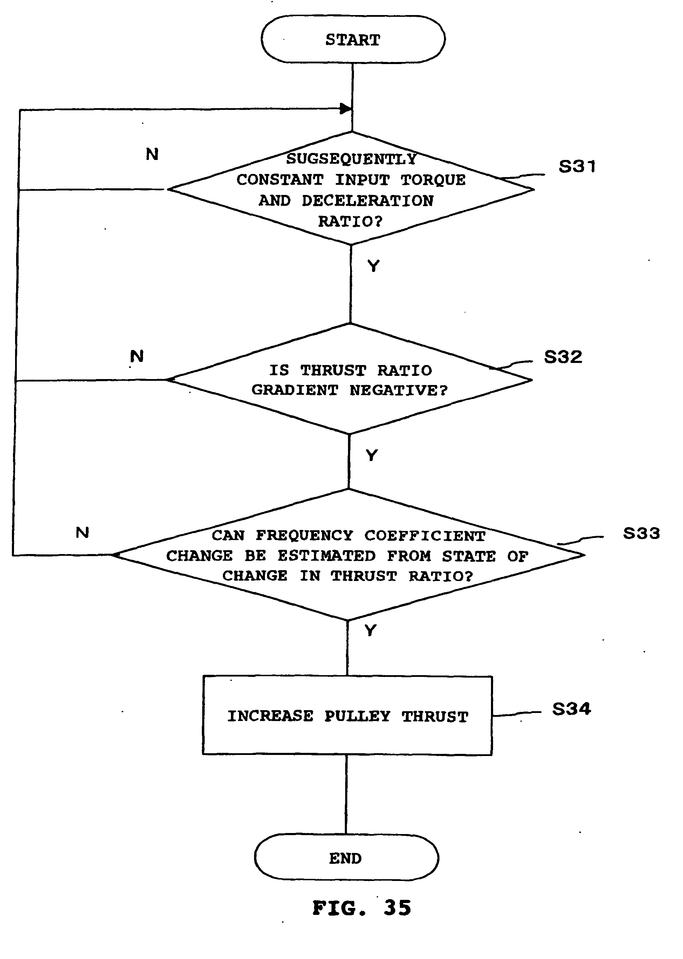

(i) As shown in Fig. 35, whether or not input torque and deceleration ratio can be determined to be substantiallyconstant is determined (S31). When the determination is YES, whether or not the gradient of the thrust ratio relative to the secondary thrust (during reducing the secondary thrust) falls in a negative region (a region with excess thrust) is determined (S32). This can be achieved by slightly changing the secondary pulley thrust to see a change in the thrust ratio, as described in the preceding embodiments.

When it is determined that the gradient of the thrust ratio falls in the negative region, the secondary pulley thrust is changed for estimation of a change in the friction coefficient based on the state of change of the thrust ratio at that time (S33). Further, based on the state of change of the friction coefficient, the thrust of the secondary pulley is increased (S34). That is, the friction coefficient is changed based on the estimated change of the friction coefficient to correct through learning the setting of the secondary pulley thrust. This arrangement makes it possible to provide appropriate thrust even when the friction coefficient changes. In particular, with this control, because detection of a change in the friction coefficient is achieved under condition where excess thrust is available, change in the friction coefficient can be detected while avoiding the risk of belt slip.

The estimation of a change in the friction coefficient at S33 can be specifically performed as follows.

Initially, whether or not a change in the gradient of a change in the thrust ratio relative to a change in the secondary thrust has become a predetermined or smaller value is determined. When the determination is YES, it is concluded that the friction coefficient between the belt and the pulley has decreased, and the secondary pulley thrust is increased. Further, a change in the gradient of a change in the thrust ratio relative to a change in the secondary thrust, which is caused by a change in the friction coefficient, is determined and stored in advance. Then, based on the determined gradient of a change in the thrust ratio relative to the change in the secondary thrust, the friction coefficient between the belt and the pulley is calculated and the secondary pulley thrust is set.

(ii) A change in the friction coefficient is estimated based on the magnitude of the thrust ratio at a time when the input torque and deceleration ratio are considered substantially constant and setting of the secondary pulley thrust is amended through learning.

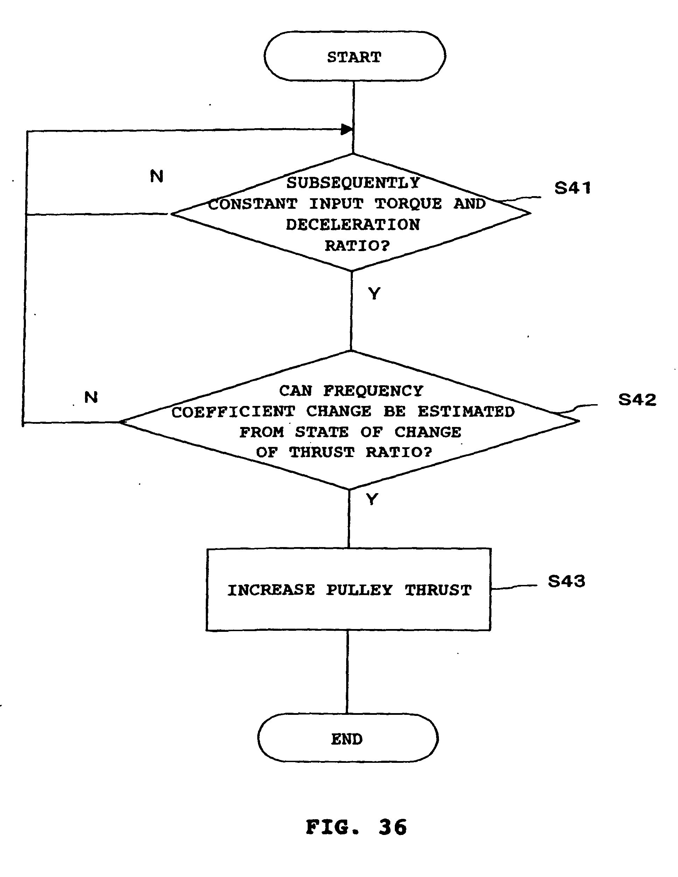

In other words, whether or not the input torque and deceleration ratio can be considered substantially constant is determined (S41), as shown in Fig. 36. When the determination is YES, whether or not the friction coefficient has been changed is determined based on the magnitude of the thrust ratio at that time (S42). When the determination is YES, the thrust of the secondary pulley is increased according to the change in the friction coefficient (S43).

According to this method, a friction coefficient can be easily determined without especially changing the pulley thrust.

Here, the determination at S42 is made such that, when the determined thrust ratio is smaller than the thrust ratio at shipment by more than a predetermined amount, it is determined that the friction coefficient between the belt and the pulley has decreased.

Alternatively, the change in the thrust ratio that results from a change in the friction coefficient between the belt and the pulley is determined and stored in advance so that the friction coefficient between the belt and the pulley is calculated based on the determined thrust ratio, and the thrust of the secondary pulley can be set based on the calculated friction coefficient.

(iii) Further, based on the fact that the peak of the thrust ratio is no longer detected, it can be known when it is necessary to replace a belt.

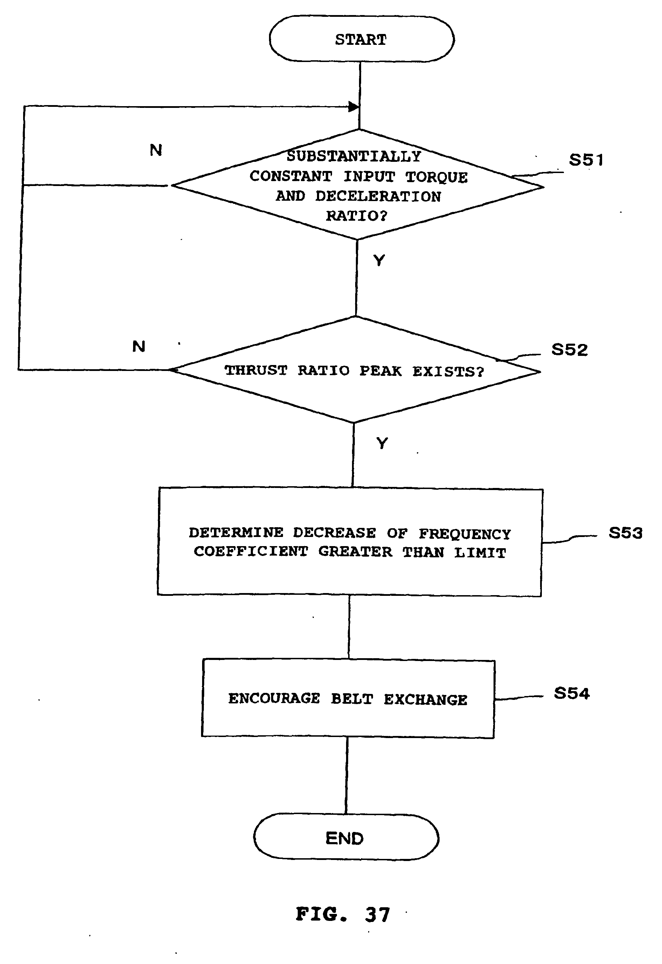

That is, as shown in Fig. 37, whether or not the input torque and deceleration ratio can be considered substantially constant is determined (S51). When the determination is YES, the secondary pulley thrust is decreased until the gradient of a change in the thrust ratio relative to the secondary pulley thrust becomes positive (in a region without excess thrust) to determine whether or not a peak of the thrust ratio is detected (S52). When it is determined that the peak of the thrust ratio is no longer detectable, it is determined that the friction coefficient between the belt and the pulley has decreased more than a predetermined value (more than a limit) (S53), whereby a decrease of an amount greater than a limit in the friction coefficient is determined. When the determination at S53 is YES, a display warning of the need to replace belts can be generated to encourage belt replacement (S54).

As described above, according to this embodiment, a change in the friction coefficient between the belt and the pulley can be detected based on the state of the thrust ratio, which allows correction of pulley thrust control according to the result of detection.

Therefore, this embodiment can produce the following advantage.

A decrease in the friction coefficient between the belt and the pulley can be detected from the temperature of the CVT oil so that the belt clamping force can be increased to prevent the belt from slipping.

Further, a decrease in the friction coefficient between the belt and the pulley due to a change over time in the metallic belt or the CVT oil can be detected so that the belt clamping force can be increased to prevent the belt from slipping.

Still further, when the friction coefficient between the belt and the pulley decreases more than a predetermined value, an alarm can be made warning the need of belt exchange.

**Claims**

1. A pulley thrust control device for a belt-type continuously variable transmission unit comprising a driving pulley (12) and a following pulley (18) connected via a belt (16) with the driving pulley (12), and capable of continuously changing a speed changing ratio by changing effective diameters of the driving pulley (12) and the following pulley (18), wherein a thrust ratio between the thrust of the driving pulley (12) and the thrust of the following pulley (18) and a hydraulic pressure command value are determined,

**characterized in that,** an excitement signal from an exciting section (56,72) is added to the determined hydraulic pressure command value, so as to excite the thrust of at least one of the driving pulley (12) and the following pulley (18), and the thrust of this pulley (12,18) is controlled based on a state of change of the thrust ratio, such that the thrust ratio peaks.

**2.** The device according to claim 1, wherein the pulley thrust is controlled such that the thrust ratio approaches a point at which the gradient of change of the thrust ratio changes.

**3.** The device according to claim 2, wherein the gradient of the thrust ratio is periodically determined while the pulley thrust changes; compensation for a time delay is applied to determined values for the gradient; and a point at which the gradient changes is determined based on a signal for which the time delay has been compensated.

**4.** The device according to claim 3, wherein, during the compensation for a time delay, a time for delay compensation is set according to the gradient at that time.

**5.** The device according to claim 3 or 4, wherein a process of compensating for the time delay is a process using a high-pass filter to cut a low frequency signal associated with a periodically-determined gradient.

**6.** The device according to any one of claims 1 to 5, wherein the state of change of the thrust ratio is determined while the pulley thrust is varied according to a predetermined cycle.

**7.** The device according to any one of claims 1 to 6, wherein the state of change of the thrust ratio is determined while a driving torque is varied.

**8.** The device according to claim 7, wherein the state of change of the thrust ratio is determined while a driving torque is varied according to a predetermined cycle.

**9.** The device according to any one of claims 1 to 6, wherein the state of change of the thrust ratio is determined while a ground surface disturbance is varied.

**10.** The device according to any one of claims 1 to 6, wherein the thrust ratio is determined by measuring a hydraulic pressure which controls thrust of the driving pulley and the following 5 pulley.

**11.** The device according to any one of claims 1 to 9, wherein the thrust ratio is determined based on a command value for a hydraulic pressure which controls thrust of the driving pulley and the following pulley.

**12.** The device according to any one of claims 1 to 11, further comprising a control map for determining pulley thrust based on a state of power transmission of the continuously variable transmission unit, wherein the control map is amended based on the state of change of the thrust ratio.

**Patentansprüche**

**1.** Riemenscheiben-Drucksteuerungseinrichtung für eine stufenlos verstellbare Getriebeeinheit mit Riemen, enthaltend eine antreibende Scheibe (12) und eine nachfolgende Scheibe (18), die über einen Riemen (16) mit der antreibenden Scheibe (12) verbunden ist, und die in der Lage ist, kontinuierlich ein Geschwindigkeitsübersetzungsverhältnis durch Veränderung von effektiven Durchmessern der antreibenden Riemenscheibe (12) und der nachfolgenden Riemenscheibe (18) zu verändern, wobei ein Druckverhältnis zwischen dem Druck der antreibenden Riemenscheibe (12) und dem Druck der nachfolgenden Riemenscheibe (18) und ein Hydraulikdrucksollwert bestimmt werden, **dadurch gekennzeichnet, dass** ein Anregungssignal von einem Anregungsabschnitt (56, 72) dem bestimmten Hydraulikdrucksollwert zuaddiert wird, so dass der Druck von zumindest entweder der antreibenden Riemenscheibe (12) oder der nachfolgenden Riemenscheibe (18) angeregt wird, und der Druck dieser Riemenscheibe (12, 18) basierend auf einem Veränderungszustand des Druckverhältnisses gesteuert wird, so dass das Druckverhältnis einen Maximalwert einnimmt.

**2.** Einrichtung nach Anspruch 1, wobei der Scheibendruck derart gesteuert wird, dass das Druckverhältnis sich einem Punkt annähert, an dem sich der Veränderungsgradient des Druckverhältnisses verändert.

**3.** Einrichtung nach Anspruch 2, wobei der Gradient des Druckverhältnisses periodisch bestimmt wird, während sich der Riemenscheibendruck ändert; eine Kompensation für einen Zeitverzug auf die bestimmten Werte für den Gradienten angewendet wird; und ein Punkt, an dem sich der Gradient verändert, basierend auf einem Signal bestimmt wird, für das der Zeitverzug kompensiert worden ist.

**4.** Einrichtung nach Anspruch 3, wobei während der Kompensation eines Zeitverzugs eine Zeit für die Verzugskompensation entsprechend dem Gradienten zu dieser Zeit festgelegt wird.

**5.** Einrichtung nach Anspruch 3 oder 4, wobei ein Verfahren zum Kompensieren des Zeitverzugs ein Verfahren ist, das einen Hochpassfilter verwendet, um ein Niederfrequenzsignal abzuschneiden, das zu einem periodisch bestimmten Gradienten gehört.

**6.** Einrichtung nach einem der Ansprüche 1 bis 5, wobei der Veränderungszustand des Druckverhältnisses bestimmt wird, während der Scheibendruck entsprechend einem vorbestimmten Zyklus variiert wird.

**7.** Einrichtung nach einem der Ansprüche 1 bis 6, wobei der Veränderungszustand des Druckverhältnisses bestimmt wird, während ein antreibendes Drehmoment variiert wird.

**8.** Einrichtung nach Anspruch 7, wobei der Änderungszustand des Druckverhältnisses bestimmt wird, während ein antreibendes Drehmoment entsprechend einem vorbestimmten Zyklus variiert wird.

**9.** Einrichtung nach einem der Ansprüche 1 bis 6, wobei der Änderungszustand des Druckverhältnisses bestimmt wird, während eine Bodenoberflächenstörung variiert wird.

**10.** Einrichtung nach einem der Ansprüche 1 bis 6, wobei das Druckverhältnis bestimmt wird, indem ein Hydraulikdruck gemessen wird, der den Druck der antreibenden Scheibe und der nachfolgenden Scheibe steuert.

**11.** Einrichtung nach einem der Ansprüche 1 bis 9, wobei das Druckverhältnis basierend auf einem Sollwert für einen Hydraulikdruck bestimmt wird, der den Druck der antreibenden Scheibe und der nachfolgenden Scheibe steuert.

**12.** Einrichtung nach einem der Ansprüche 1 bis 11, weiter enthaltend eine Steuerungskarte zum Bestimmen des Scheibendrucks basierend auf einem Zustand der Leistungsübertragung der stufenlos verstellbaren Getriebeeinheit, wobei die Steuerungskarte basierend auf der Veränderung des Druckverhältnisses verbessert wird.

**Revendications**

**1.** Dispositif de commande de poussée axiale de poulie pour une unité de transmission à variation continue à courroie comprenant une poulie (12) motrice et une poulie (18) menée raccordée par une courroie (16) à la poulie (12) motrice, et capable de changer en continu un rapport de changement de vitesse en changeant les diamètres effectifs de la poulie (12) motrice et de la poulie (18) menée,
dans lequel un rapport de poussée axiale entre la poussée axiale de la poulie (12) motrice et la poussée axiale de la poulie (18) menée et une valeur de commande de pression hydraulique sont déterminés,
**caractérisé en ce qu'**un signal d'excitation provenant d'une section (56, 72) d'excitation est ajouté à la valeur déterminée de commande de pression hydraulique, afin d'exciter la poussée axiale d'au moins l'une des poulies motrice (12) et menée (18) et la poussée axiale de cette poulie (12 ou 18) est commandée sur la base d'un état de changement du rapport de poussée axiale, de sorte que le rapport de poussée axiale soit maximal.

**2.** Dispositif selon la revendication 1, dans lequel la poussée axiale des poulies est commandée de sorte que le rapport de poussée axiale tende vers un point auquel le gradient de changement du rapport de poussée axiale change.

**3.** Dispositif selon la revendication 2, dans lequel le gradient du rapport de poussée axiale est déterminé périodiquement, alors que la poussée axiale des poulies change ; une compensation d'un retard est appliquée aux valeurs déterminées pour le gradient ; et un point auquel le gradient change est déterminé sur la base d'un signal pour lequel le retard a été compensé.

**4.** Dispositif selon la revendication 3, dans lequel, pendant la compensation du retard, un temps de compensation de retard est défini en fonction du gradient à ce moment.

**5.** Dispositif selon la revendication 3 ou 4, dans lequel un procédé de compensation du retard est un procédé utilisant un filtre passe-haut pour éliminer un signal de fréquence basse associé à un gradient déterminé périodiquement.

**6.** Dispositif selon l'une quelconque des revendications 1 à 5, dans lequel l'état de changement du rapport de poussée axiale est déterminé alors que la poussée axiale des poulies varie en fonction d'un cycle prédéterminé.

**7.** Dispositif selon l'une quelconque des revendications 1 à 6, dans lequel l'état de changement du rapport de poussée axiale est déterminé alors qu'un couple moteur varie.

**8.** Dispositif selon la revendication 7, dans lequel l'état de changement du rapport de poussée axiale est déterminé alors qu'un couple moteur varie en fonction d'un cycle prédéterminé.

**9.** Dispositif selon l'une quelconque des revendications 1 à 6, dans lequel l'état de changement du rapport de poussée axiale est déterminé alors qu'une perturbation de l'état de la surface rectifiée varie.

**10.** Dispositif selon l'une quelconque des revendications 1 à 6, dans lequel le rapport de poussée axiale est déterminé en mesurant une pression hydraulique qui commande la poussée axiale de la poulie motrice et de la poulie menée.

**11.** Dispositif selon l'une quelconque des revendications 1 à 9, dans lequel le rapport de poussée axiale est déterminé sur la base d'une valeur de commande d'une pression hydraulique qui commande la poussée axiale de la poulie motrice et de la poulie menée.

**12.** Dispositif selon l'une quelconque des revendications 1 à 11, comprenant en outre une application de commande pour déterminer la poussée axiale des poulies sur la base d'un état de transmission de puissance de l'unité de transmission à variation continue, l'application de commande étant modifiée sur la base de l'état de changement du rapport de poussée axiale.

FIG.1

SPEED RATIO
CALCULATION SECTION

38

SPEED RATIO COMMAND VALUE
DETERMINATION SECTION

30

DRIVER-SIDE HYDRAULIC PRESSURE
COMMAND VALUE DETERMINATION SECTION

32

DRIVING PULLEY THRUST
CALULATION SECTION

44

DRIVER-SIDE HYDRAULIC COMMAND
VALUE ADJUSTMENT SECTION

40

DRIVER-SIDE ROTATION RATE
DETERMINATION SECTION

34

DRIVER-SIDE HYDRAULIC PRESSURE
DETERMINATION SECTION

42

10

FROM ENGINE

HYDRAULIC
CONTROL VALVE

15

14

FOLLOWER-SIDE HYDRAULIC
PRESSURE CONTOROL VALVE

60

20

TO VEHICLE WHEEL

22

FOLLOWER-SIDE HYDRAULIC PRESSURE
DETERMINAITION SECTION

46

FOLLOWER-SIDE ROTATION RATE
DETERMINATION SECTION

36

FOLLOWER-SIDE HYDRAULIC PRESSURE
COMMAND VALUE ADJUSTMENT SECTION

58

18

FOLLOWING PULLEY THRUST
CALCULLATION SECTION

48

HYDRAULIC PRESSURE
EXCITING SECTION

56

FOLLOWER-SIDE HYDRAULIC PRESSURE
COMMAND VALUE DETERMINATION SECTION

54

THRUST RATIO STATE OF CHANGE
IDENTIFYING SECTION

52

THRUST RATIO
CALCULATION SECTION

50

12 16 12a 12b

18a 18b 16

EP 1 236 935 B1

21

THRUST RATIO

DRIVING PULLEY ACTIVE
ARC RATIO

FOLLOWING PULLEY ACTIVE
ARC RATIO

FOLLOWING PULLEY THRUST

THRUST RATIO AND ACTIVE ARC RATIO

FIG. 2

CASE WITH EXCESS THRUST

**FIG. 3**

THRUST RATIO IN CASE WITH EXCESS THRUST

**FIG. 4**

DRIVING PULLEY          FOLLOWING PULLEY

CASE WITH DECREASED THRUST

**FIG. 5**

THRUST RATIO IN CASE WITH EXCESS THRUST

**FIG. 6**

DRIVING PULLEY          FOLLOWING PULLEY

CASE WITH FURTHER DECREASED THRUST

**FIG. 7**

THRUST RATIO IN CASE WITH FURTHER DECREASED THRUST

**FIG. 8**

THRUST RATIO AND TRANSMISSION EFFICIENCY

FIG. 9

FIG. 10

26

FIG. 11

**FIG. 12**

HYDRAULIC PRESSURE-THRUST RATIO TRANSMISSION CHARACTERISTICS

FIG. 13

FIG. 14

FIG. 15

FIG.16

FIG.17

FIG. 18

FIG.19

SPEED RATIO COMMAND VALUE DETERMINATION SECTION — 30

DRIVER-SIDE HYDRAULIC PRESSURE COMMAND VALUE DETERMINATION SECTION — 32

DRIVER-SIDE HYDRAULIC COMMAND VALUE ADJUSTMENT SECTION — 40

DRIVER-SIDE HYDRAULIC PRESSURE DETERMINATION SECTION — 42

HYDRAULIC CONTROL VALVE — 15

FOLLOWER-SIDE ROTATION RATE DETERMINATION SECTION — 36

FOLLOWING PULLEY THRUST CALCULATION SECTION — 48

TO VEHICLE WHEEL — 22

SPEED RATIO CALCULATION SECTION — 38

DRIVING PULLEY THRUST CALCULATION SECTION — 44

DRIVER-SIDE ROTATION RATE DETERMINATION SECTION — 34

DRIVING TORQUE EXCITING SECTION — 72

DRIVING TORQUE DETERMINATION SECTION — 70

FOLLOWER-SIDE HYDRAULIC PRESSURE CONTROL VALVE — 60

FOLLOWER-SIDE HYDRAULIC PRESSURE DETERMINATION SECTION — 58

FOLLOWER-SIDE HYDRAULIC PRESSURE COMMAND VALUE ADJUSTMENT SECTION — 54

THRUST RATIO STATE OF CHANGE IDENTIFYING SECTION — 52

THRUST RATIO CALCULATION SECTION — 50

FROM ENGINE

FIG.20

FIG.21

PRESENT INVENTION

CONVENTIONAL

TRANSMISSION
EFFICIENCY

BELT SLIPPING RATE

1.0

TRANSMISSION TORQUE/TRANSMISSION TOLERANCE TORQUE

**FIG. 22**

FIG. 23

EP 1 236 935 B1

APPROXIMATE METHOD OF THRUST RATIO AT OPERATION POINT

**FIG. 24**

THRUST RATIO GRADIENT UNTIL THRUST RATIO PEAK $\times 10^{-6}$
(ABSOLUTE VALUE)

DELAY TIME $\Delta t$ RELATIVE TO THRUST RATIO GRADIENT (CHANGE)

**FIG. 26**

(a) CASE 1

(b) CASE 2

FIG. 25

START

2 Hz HIGH-PASS FILTERING GRADIENT k — S11

OBTAIN ABSOLUTE VALUE OF HIGH-PASSED VALUE — S12

1 Hz LOW-PASS FILTERING ABSOLUTE VALUE — S13

S14 ABSOLUTE VALUE > thr 1 ? — NO

YES S15 11 SECONDS PASSED AFTER ESTIMATION BEGAN? — NO

YES S16 LOW-PASSED VALUE < thr 2 ? — NO

YES S17 GRADIENT k(i) < 0.0 ? — NO

YES

$f(i) = \alpha \cdot k(i)^n$ — S18

S19 $f(i) > 0.005$? — NO

$f(i) = 0.005$ Hz — S20

YES

TIME CONSTANT $T(i) = 1/2\pi\, f(i)$ — S21

END

**FIG. 27**

42

(a) CASE 1

(b) CASE 2

**FIG. 28**

FIG. 29

SPEED RATIO, INPUT TORQUE

200

**THRUST RATIO**
**SECONDARY THRUST**

204

```
┌──────────────┐                              ┌──────────────┐
│ THRUST RATIO │                              │ BELT CLAMPING│
│ CALSULATION  │ ───────────────────────────▶ │ FORCE OFFLINE│
│   CIRCUIT    │                              │SETTING SECTION│
└──────────────┘                              └──────────────┘
```

**FIG. 30**

THRUST RATIO

THRUST RATIO PEAK

CONSTANT TORQUE,
CONSTANT SPEED RATIO

RANGE OF DECREASING
THRUST RATIO>PREDETERMINED VALUE
=MACRO-SLIP LIMIT

MACRO-SLIP

SECONDARY THRUST[N]

**FIG. 31**

START

SET CONSTANT TORQUE AND SPEED RATIO — S61

DECREASES SECONDARY THRUST TO DETECT CHANGE IN THRUST RATIO — S62

Y

N   MACRO-SLIP LIMIT?   S63

Y

CALCULATE MAXIMUM FREQUENCY COEFFICIENT — S64

DETERMINE APPROPRIATE SECONDARY THRUST — S65

END

**FIG. 32**

SPEED RATIO, INPUT TORQUE

200

202

THRUST RATIO
SECONDARY THRUST

THRUST RATIO
CALSULATION
CIRCUIT

MAXIMUM RREQUENCY
COEFFICIENT
DECREASE DETECTION
CIRCUIT

**FIG. 33**

THRUST RATIO

LARGER FREQUENCY COEFFICIENT

CONSTANT TORQUE,
CONSTANT SPEED RATIO

SMALLER FREQUENCY COEFFICIENT

SECONDARY THRUST[N]

**FIG. 34**

START

SUGSEQUENTLY
CONSTANT INPUT TORQUE
AND DECELERATION
RATIO? — S31

N

Y

IS THRUST RATIO
GRADIENT NEGATIVE? — S32

N

Y

CAN FREQUENCY COEFFICIENT
CHANGE BE ESTIMATED FROM STATE OF
CHANGE IN THRUST RATIO? — S33

N

Y

INCREASE PULLEY THRUST — S34

END

FIG. 35

START

N — SUBSEQUENTLY CONSTANT INPUT TORQUE AND DECELERATION RATIO? — S41

Y

N — CAN FREQUENCY COEFFICIENT CHANGE BE ESTIMATED FROM STATE OF CHANGE OF THRUST RATIO? — S42

Y

INCREASE PULLEY THRUST — S43

END

FIG. 36

START

N — SUBSTANTIALLY CONSTANT INPUT TORQUE AND DECELERATION RATIO? — S51

Y

N — THRUST RATIO PEAK EXISTS? — S52

Y

DETERMINE DECREASE OF FREQUENCY COEFFICIENT GREATER THAN LIMIT — S53

ENCOURAGE BELT EXCHANGE — S54

END

**FIG. 37**